# EUROPEAN PATENT APPLICATION

(11) **EP 4 372 600 A1**
(43) Date of publication of application: **22.05.2024**
(21) Application number: 22842100.4
(22) Date of filing: 12.07.2022
(51) Int. Cl.: G06F 30/20

(54) **METHOD FOR ARRANGING ENVIRONMENT ADJUSTMENT DEVICE, DEVICE, AND SYSTEM**

(30) Priority: 13.07.2021 CN 202110789485
(71) Applicant: Daikin Industries, Ltd., Osaka-Shi, Osaka 530-0001 (JP)
(72) Inventor: ZHANG, Mengqiao, Osaka-shi, Osaka 530-0001 (JP)
(74) Representative: Global IP Europe Patentanwaltskanzlei
(86) International application number: PCT/JP2022/027360
(87) International publication number: WO 2023/286756

(57) **Abstract**

The present invention provides a method, an apparatus, and a system for arranging an environment adjustment device. An optimal position of an environment adjustment device is calculated based on a simulation result of a target parameter in a preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

## Description

### Technical Field

The present invention relates to the field of environment adjustment devices, and in particular, to an arrangement method, apparatus, and system for an environment adjustment device.

### Background Art

With the development of economy and the improvement in standard of living, various environment adjustment devices such as air conditioners for example are widely applied in various fields.

Taking an air conditioner as an example, an existing design process for an air conditioning system mainly includes several major steps such as load calculation, plan determination, device model selection, and wiring/piping plotting. While the design flow is constant, since buildings have varying modes and complex structures, an HVAC engineer needs to redesign the air conditioning system for a different building according to the flow. The engineers need to spend a lot of time on repetitive work such as load calculation and wiring/piping. In addition, when the building design is changed, the design of the air conditioner also needs to be changed accordingly, meaning that the design process needs to be repeated all over again.

In particular, the model selection and distribution of the air conditioners are merely simple calculation and arrangement, which largely deviate from the construction and selection in the actual process. At present, visualization of an air conditioner arranged in a corresponding room is possible, but involves a large error compared with the actual design accuracy.

Furthermore, the engineers rely on his or her experience for many tasks in the design of the air conditioning system. Thus, the experienced engineers make rational design proposals. As a result, the design process of the air conditioning system is deeply subjective.

PTL 1 (Chinese Patent Publication No. 110489875) discloses a method for designing a layout of an air outlet of an air conditioner in software, with a design drawing and an interior model of a ventilation air conditioner of a building provided. The method includes: establishing a complete BIM model based on the design drawing and the interior model of the ventilation air conditioner, and determining an initial position of an air supply port of the air conditioner in each room in the complete BIM model; introducing the complete BIM model to Autodesk CFD software, performing comprehensive evaluation analysis on temperature change and wind vector, and determining an optimal position of the air supply port of the air conditioner of each room in the complete BIM model; and verifying the optimal position of the air supply port of the air conditioner of each room in the complete BIM model.

However, in PTL 1, automated design is implemented only in software, and as a whole, effect of visualization is provided, with the arrangement accuracy limited to the arrangement accuracy in the software. Furthermore, the document relates to the position setting of the air supply port only, and is unrelated to how the air conditioning device is arranged.

It should be noted that the foregoing introduction of the technical background is merely provided for the sake of clear and complete description of the technical solutions of the present invention and for easy understanding by those skilled in the art. Description of these solutions in the background of the present invention should not be simply interpreted as the above technical solutions being known to those skilled in the art.

### Summary of Invention

In order to solve at least one of the above problems described above, Examples of the present invention provide arrangement method, apparatus, and system for an environment adjustment device with which an optimal position of the environment adjustment device is calculated based on a simulation result of a target parameter in a preset region, and the environment adjustment device is laid out based on the optimal position. Thus, the arrangement accuracy is not limited to that in the software, and is closer to the actual design site of the environment adjustment device and user needs, thereby facilitating instructions. In the actual process of arranging the environment adjustment device, the accuracy of the arrangement position is higher, and wide applicability is achieved.

According to a first aspect of Example of the present invention, there is provided an arrangement method for an environment adjustment device, the method including: acquiring a simulation result of a target parameter in a preset region; calculating an optimal position of an environment adjustment device based on the simulation result; and arranging the environment adjustment device in the preset region based on the optimal position of the environment adjustment device.

According to a second aspect of Example of the present invention, there is provided an arrangement apparatus for an environment adjustment device, the apparatus including: an acquisition unit configured to acquire a simulation result of a target parameter in a preset region; a calculation unit configured to calculate an optimal position of the environment adjustment device based on the simulation result; and an arrangement unit configured to arrange the environment adjustment device in the preset region based on the optimal position of the environment adjustment device.

According to a third aspect of Example of the present invention, there is provided an arrangement system for an environment adjustment device, the system including: a collection device configured to collect an environmental parameter; and the arrangement apparatus for the environment adjustment device according to the second aspect of Example of the present invention.

As one advantageous effect of Example of the present invention, the optimal position of the environment adjustment device is calculated based on the simulation result of the target parameter in the preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

With reference to the following description and drawings, certain embodiments of the present invention are disclosed in detail, and modes employing the principles of the present invention are clearly described. It should be understood that the embodiments of the present invention are not limited in scope. Many variations, modifications, and equivalents of the embodiments of the present invention within the spirit of the appended claims and scope of the clauses are included.

Feature information described and illustrated in one embodiment may be used in one or more other embodiments in the same or similar mode, may be combined with feature information in other embodiments, or may replace feature information in other embodiments.

It should be emphasized that the term "comprises/comprising" when used in this specification is taken to specify the presence of feature information, element, step, or assembly but does not preclude the presence or addition of one or more other feature information pieces, elements, steps, or assemblies.

### Brief Description of Drawings

Many aspects of the present invention can be better understood with reference to the following drawings. The components in the figures are not necessarily to scale, and are provided merely for illustration of the principles of the present invention. To facilitate illustration and description of some parts of the present invention, corresponding parts may be illustrated with increased or reduced size in the drawings. Elements and feature information described in one drawing or one embodiment of the present invention can be combined with elements and feature information described in one or more other drawings or embodiments. Moreover, in the drawings, like reference numerals designate corresponding components in some drawings, and may be used to designate corresponding components used in more than one embodiments. The drawings include the following.
[Fig. 1] Fig. 1 is a flowchart of an arrangement method for an environment adjustment device according to Example 1 of the present invention.
[Fig. 2] Fig. 2 is a flowchart of a method for implementing step 101 according to Example 1 of the present invention.
[Fig. 3] Fig. 3 is an example of a cloud map of a change in temperature at a plurality of simulation points at a plurality of time points or in a plurality of time zones according to Example 1 of the present invention.
[Fig. 4] Fig. 4 is a flowchart of a simulation method for an outdoor unit of an air conditioner.
[Fig. 5] Fig. 5 is a flowchart of a simulation method for an indoor unit of an air conditioner.
[Fig. 6] Fig. 6 is a schematic view illustrating calculation for an optimal position of the environment adjustment device, using a machine learning model according to Example 1 of the present invention.
[Fig. 7] Fig. 7 is a flowchart of a method for implementing step 102 according to Example 1 of the present invention.
[Fig. 8] Fig. 8 is a flowchart of a method for training the machine learning model according to Example 1 of the present invention.
[Fig. 9] Fig. 9 is a flowchart of another method for implementing step 102 according to Example 1 of the present invention.
[Fig. 10] Fig. 10 is a flowchart of an arrangement method for an outdoor unit of an air conditioner according to Example 1 of the present invention.
[Fig. 11] Fig. 11 is a flowchart of another arrangement method for an outdoor unit of an air conditioner according to Example 1 of the present invention.
[Fig. 12] Fig. 12 is a flowchart of an arrangement method for an indoor unit of an air conditioner according to Example 1 of the present invention.
[Fig. 13] Fig. 13 is a flowchart of another arrangement method for an indoor unit of an air conditioner according to Example 1 of the present invention.
[Fig. 14] Fig. 14 is a flowchart of an arrangement method for the environment adjustment device in an actual scene according to Example 1 of the present invention.
[Fig. 15] Fig. 15 is a flowchart of an arrangement method for the environment adjustment device in a BIM model according to Example 1 of the present invention.
[Fig. 16] Fig. 16 is a flowchart of a method for implementing step 1501 according to Example 1 of the present invention.
[Fig. 17] Fig. 17 is a flowchart of a method for implementing step 1502 according to Example 1 of the present invention.
[Fig. 18] Fig. 18 is a flowchart of a method for implementing step 1503 according to Example 1 of the present invention.
[Fig. 19] Fig. 19 is a flowchart of a method for implementing step 1504 according to Example 1 of the present invention.
[Fig. 20] Fig. 20 is a flowchart of a method for implementing step 1505 according to Example 1 of the present invention.
[Fig. 21] Fig. 21 is a flowchart of a method for implementing step 1506 according to Example 1 of the present invention.
[Fig. 22] Fig. 22 is a flowchart of another method for implementing step 1506 according to Example 1 of the present invention.
[Fig. 23] Fig. 23 is a flowchart of a method for implementing steps 1507 to 1512 according to Example 1 of the present invention.
[Fig. 24] Fig. 24 is a flowchart of an embodiment of a method for implementing step 2303 according to Example 1 of the present invention.
[Fig. 25] Fig. 25 is a flowchart of another embodiment of a method for implementing step 2303 according to Example 1 of the present invention.
[Fig. 26] Fig. 26 is a flowchart of a further embodiment of a method for implementing step 2303 according to Example 1 of the present invention.
[Fig. 27] Fig. 27 is a flowchart of a method for simultaneously arranging an indoor unit and an outdoor unit of an air conditioner according to Example 1 of the present invention.
[Fig. 28] Fig. 28 is a flowchart of an arrangement method for an air conditioner with excellent energy-saving according to Example 1 of the present invention.
[Fig. 29] Fig. 29 is a schematic view of an arrangement apparatus for an environment adjustment device according to Example 2 of the present invention.
[Fig. 30] Fig. 30 is a structural diagram of an arrangement system for an environment adjustment device according to Example 3 of the present invention.

### Description of Embodiments

Hereinafter, preferred embodiments of the present invention will be described with reference to the drawings.

### (EXAMPLE 1)

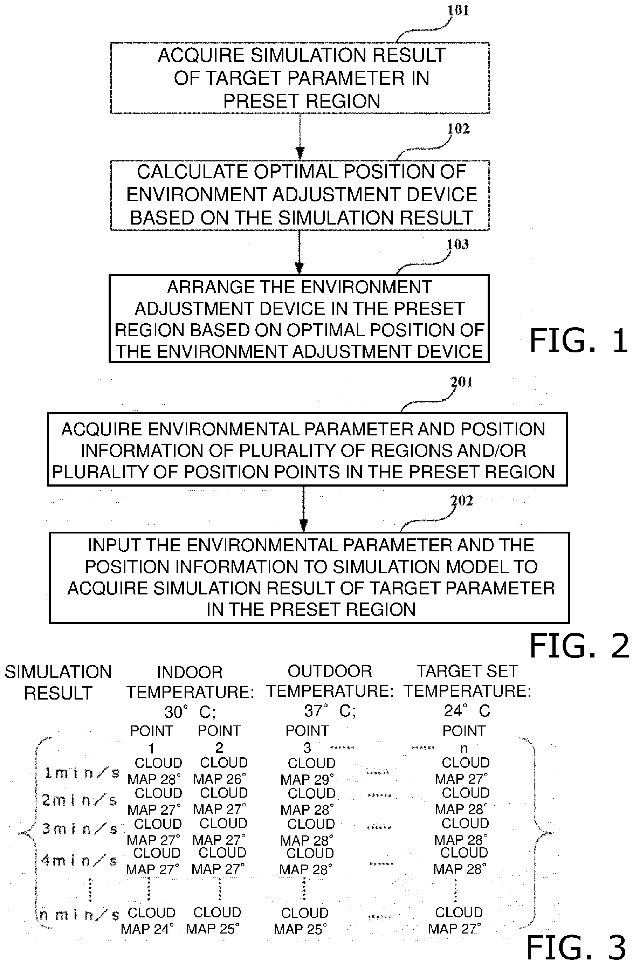

Example 1 of the present invention provides an arrangement method for an environment adjustment device. Fig. 1 is a flowchart illustrating the arrangement method for an environment adjustment device according to Example 1 of the present invention. As illustrated in Fig. 1, the method includes:
step 101 of acquiring a simulation result of a target parameter in a preset region; step 102 of calculating an optimal position of an environment adjustment device based on the simulation result; and step 103 of arranging the environment adjustment device in the preset region based on the optimal position of the environment adjustment device.

As described above, the optimal position of the environment adjustment device is calculated based on the simulation result of the target parameter in the preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

In Example of the present invention, the environment adjustment device may be various types of environment adjustment devices. For example, the environment adjustment device is at least one of an air conditioning device, an air purifier, a fresh air device, a humidifier, a disinfection device, a lighting device, and a sound device.

In Example of the present invention, the environment adjustment device may be used for household, business, or public use.

For example, the environment adjustment device may be used in a home environment, a commercial environment such as an office, an office building, or a department store, or a public environment such as a school.

In Example of the present invention, exemplary description is given with an air conditioning device used as an example. The air conditioning device may be a separate type or a multi-type air conditioner, or may be a central air conditioning system.

In Example of the present invention, the air conditioning device includes an indoor unit of an air conditioner and/or an outdoor unit of an air conditioner. Thus, Example of the present invention is applied to the arrangement of an indoor unit of an air conditioner chamber, and is also applied to the arrangement of an outdoor unit of an air conditioner.

In step 101, a simulation result of a target parameter in a preset region is acquired. The preset region is a region where the environment adjustment device is arranged.

For example, in a case of an outdoor unit of an air conditioner, the preset region may be a region of a roof of a building. For example, in a case of an indoor unit of an air conditioner, the preset region may be a region of a room in a building.

In Example of the present invention, the target parameter may be a parameter related to the performance of the environment adjustment device to be arranged or a parameter of the environment adjustment device affecting the environment.

For example, in a case of an outdoor unit of an air conditioner, the target parameter is a heat dissipation amount. For example, in a case of an indoor unit of an air conditioner, the target parameter is a temperature and/or an air flow.

Fig. 2 is a flowchart of a method for implementing step 101 according to Example 1 of the present invention. As illustrated in Fig. 2, the method includes: step 201 of acquiring an environmental parameter and position information of a plurality of regions and/or a plurality of position points in the preset region; and step 202 of inputting the environmental parameter and the position information to a simulation model to acquire a simulation result of a target parameter in the preset region.

In Example of the present invention, the environmental parameter may be various parameters of the environment where the environment adjustment device is located.

For example, the environmental parameter may include at least one of indoor and/or outdoor temperature, humidity, wind direction, air volume, sound volume, sound frequency, brightness, color temperature, air quality, height of a building where the environment adjustment device is located, geographical location of the building, climate information, a room orientation, information of shading by surrounding buildings, room type information of a room where the environment adjustment device is located, and information of other devices in the preset region.

In Example of the present invention, the building where the environment adjustment device is located is also referred to as a main building.

In Example of the present invention, for example, the information of shading by the surrounding buildings may be an area of the preset region shielded by the buildings surrounding the building where the environment adjustment device is located for example. In this way, not only the information of the building where the environment adjustment device is located but also the influence of the surrounding buildings is taken into consideration, so that the influence on the environment adjustment device to be arranged can be examined more comprehensively, whereby the arrangement accuracy is further improved.

In Example of the present invention, the other devices may be various other devices installed in the same preset region as the environment adjustment device, and are for example, at least one of a water tower on a roof of a building, an outdoor and/or indoor fresh air device, an exhauster, and a machine chamber for example.

The information of the other devices may include an area and/or a position of at least one of the water tower on the roof of the building, the outdoor and/or indoor fresh air device, the exhauster, and the machine chamber.

In this way, the information of the other devices already installed nearby are taken into consideration, so that the influence on the environment adjustment device to be arranged can be examined more comprehensively, whereby the arrangement accuracy is further improved.

In Example of the present invention, the room type information may include at least one of a building information (BIM) model, a building model as a result of scanning/modeling, home layout information, a home two dimensional drawing, and interior information.

For example, the interior information may include an interior style and/or position and size information of a suspended ceiling.

In this way, the room type information, for example, the interior information is taken into consideration to make deviation from the actual scene small and the actual parameters are simulated for further improving the accuracy of the simulation result to reduce the deviation from the actual scene, whereby the arrangement accuracy is further improved. At the same time, high practicability is achieved.

In Example of the present invention, the position information may further include areas of the plurality of regions, and thus may include, for example, lengths and widths of the plurality of regions, and may further include height information of the plurality of regions.

The inputting of the areas of a plurality of regions as described above can be equivalent to performing simulation for each region, whereby the arrangement accuracy is further improved.

In Example of the present invention, the simulation model may be various simulation models. For example, the simulation model is a computational fluid dynamics (CFD) simulation model.

In Example of the present invention, the simulation result of the target parameter in the preset region may include a cloud map of a change in temperature at a plurality of simulation points in the preset region at a plurality of time points or in a plurality of time zones, and/or a cloud map of a change in heat dissipation amount at a plurality of simulation points in the preset region at a plurality of time points or in a plurality of time zones.

For example, in a case of an outdoor unit of an air conditioner, the simulation result is a cloud map of a change in temperature at a plurality of simulation points in the preset region at a plurality of time points or in a plurality of time zones. In a case of an indoor unit of an air conditioner, the simulation result is cloud map of a change in heat dissipation amount at a plurality of simulation points in the preset region at a plurality of time points or in a plurality of time zones.

Fig. 3 is an example of the cloud map of a change in temperature at a plurality of simulation points at a plurality of time points or in a plurality of time zones according to Example 1 of the present invention. The cloud map as illustrated in Fig. 3 includes temperature at simulation points numbered 1 to n at a plurality of time points.

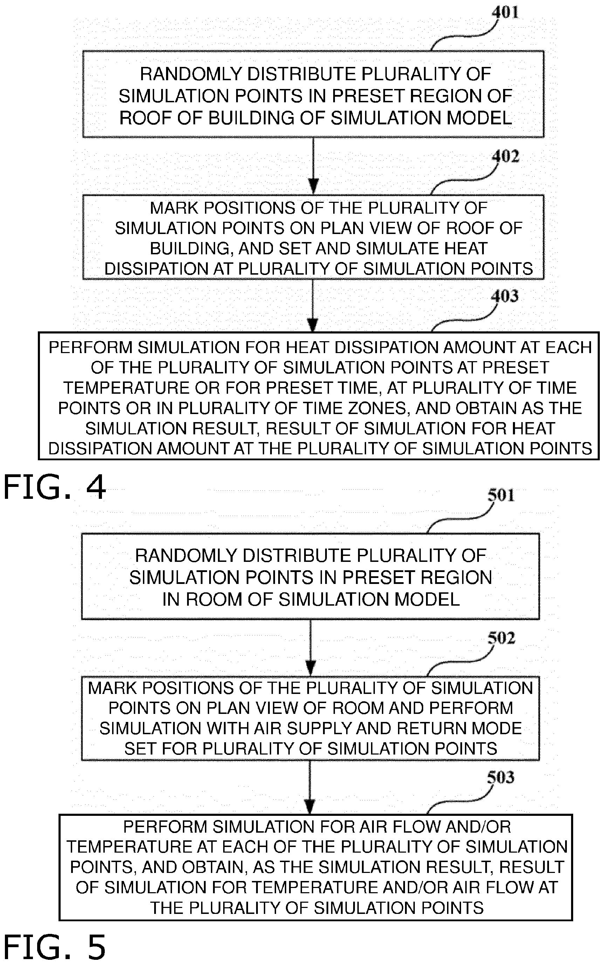

Fig. 4 is a flowchart of a simulation method for an outdoor unit of an air conditioner. As illustrated in Fig. 4, the method includes: step 401 of randomly distributing a plurality of simulation points in a preset region of a roof of a building of a simulation model; step 402 of marking positions of the plurality of simulation points on a plan view of the roof of the building, and setting and simulating heat dissipation at the plurality of simulation points; and step 403 of performing simulation for heat dissipation amount at each of the plurality of simulation points at a preset temperature or for a preset time, at a plurality of time points or in a plurality of time zones, and obtaining as the simulation result, a result of the simulation for the heat dissipation amount at the plurality of simulation points.

Fig. 5 is a flowchart of a simulation method for an indoor unit of an air conditioner. As illustrated in Fig. 5, the method includes: step 501 of randomly distributing a plurality of simulation points in a preset region in a room of a simulation model; step 502 of marking positions of the plurality of simulation points on a plan view of the room and performing simulation with an air supply and return mode set for the plurality of simulation points; and step 503 of performing simulation for air flow and/or temperature at each of the plurality of simulation points, and obtaining, as the simulation result, a result of the simulation for the temperature and/or air flow at the plurality of simulation points.

In Example of the present invention, after the simulation result is acquired, in step 102, an optimal position of the environment adjustment device is calculated based on the simulation result.

In Example of the present invention, the optimal position of the environment adjustment device includes at least one optimal position point and/or optimal region.

When there are a plurality of calculated optimal positions, a selection can be made from the plurality of optimal positions, or a plurality of environment adjustment devices can be arranged at the plurality of optimal positions, respectively.

In Example of the present invention, the optimal position may be represented by three dimensional coordinates or two dimensional coordinates.

In Example of the present invention, the optimal position of the environment adjustment device includes at least one of a position achieving good heat dissipation performance, a position achieving the target temperature is most quickly, a position achieving good energy saving performance, a position achieving good comfort, and a position achieving good decorativeness.

Thus, different optimal positions may be obtained based on different objectives or different elements to be taken into consideration.

In Example of the present invention, the optimal position of the environment adjustment device may be calculated by a machine learning model, and for example, the optimal position of the environment adjustment device may also be calculated by other methods such as an evaluation method based on scoring or ranking.

First, a method of calculating the optimal position of the environment adjustment device by a machine learning model will be described in detail.

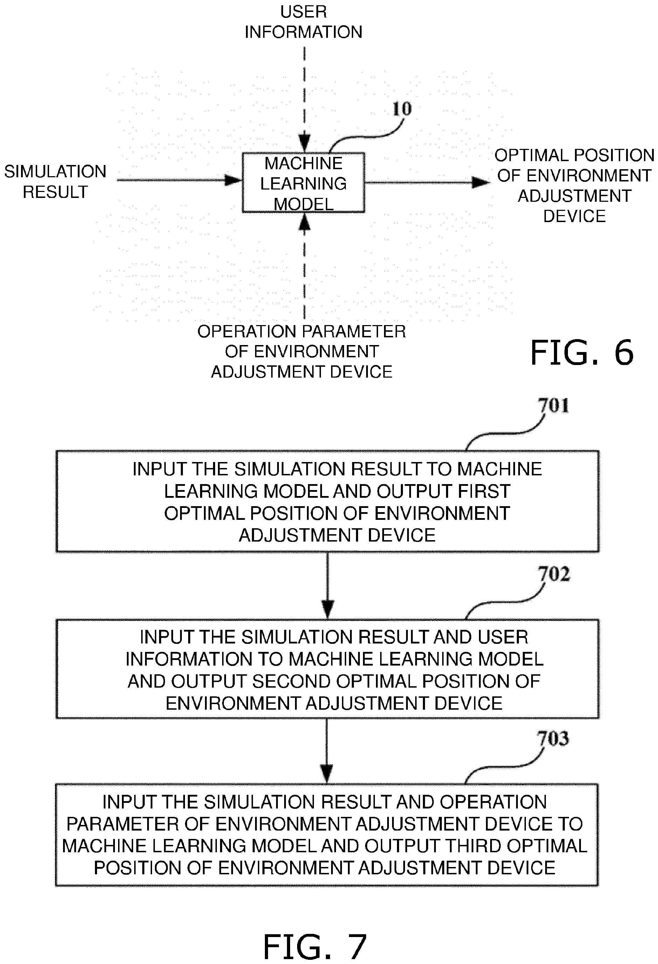

Fig. 6 is a schematic view illustrating calculation for an optimal position of the environment adjustment device, using a machine learning model according to Example 1 of the present invention.

As illustrated in Fig. 6, the simulation result is input to a machine learning model 10, and the optimal position of the environment adjustment device is output.

In Example of the present invention, the machine learning model may be various types of machine learning models. For example, the machine learning model may be a support vector machine (SVM) model or a convolutional neural network (CNN) model.

In Example of the present invention, a part corresponding to a preset height may be cut out from the simulation result, to obtain the simulation result input to the machine learning model.

For example, the preset height is the installation height of the environment adjustment device or the average height of the user.

In this way, the simulation result at the preset height is obtained as a simulation result for comfort as described above, the accuracy of arrangement at the optimal position is further improved.

In Example of the present invention, furthermore, the simulation result and the user information may be input to the machine learning model at the same time. In this way, the information of the user is taken into consideration, so that an optimal position achieving good comfort, which is an optimal position more conforming to the user's needs can be obtained.

For example, the user information may include at least one of a position, an action trajectory, and wearing of the user.

In Example of the present invention, furthermore, the simulation result and the operation parameter of the environment adjustment device may be input to the machine learning model at the same time. In this way, the operation parameter of the environment adjustment device is taken into consideration, so that the optimal position achieving high energy saving performance can be obtained.

For example, the operation parameter may be acquired from the overall BIM cooperation, the operation parameter may be extracted from simulation data, or data of test operation before shipment of the environment adjustment device may be collected and used as the operation parameter of the environment adjustment device.

In Example of the present invention, after the simulation result is input to the machine learning model and the optimal position of the environment adjustment device is output, circulating input may be further performed, that is, the simulation result and the user information may be input to the machine learning model, or the simulation result and the operation parameter of the environment adjustment device may be input to the machine learning model, whereby a larger quantity of optimal positions may be obtained.

Fig. 7 is a flowchart of a method for implementing step 102 according to Example 1 of the present invention. As illustrated in Fig. 7, the method includes: step 701 of inputting the simulation result to a machine learning model and outputting a first optimal position of the environment adjustment device; step 702 of inputting the simulation result and user information to the machine learning model and outputting a second optimal position of the environment adjustment device; and/or step 703 of inputting the simulation result and an operation parameter of the environment adjustment device to the machine learning model and outputting a third optimal position of the environment adjustment device.

In Example of the present invention, after step 701, step 702 and/or step 703 may be repeatedly performed.

In Example of the present invention, as illustrated in Fig. 6, in addition to inputting the simulation result to the machine learning model 10, the user information or the operation parameter of the environment adjustment device may be further input to the machine learning model 10.

In Example of the present invention, the machine learning model may be obtained in advance by training.

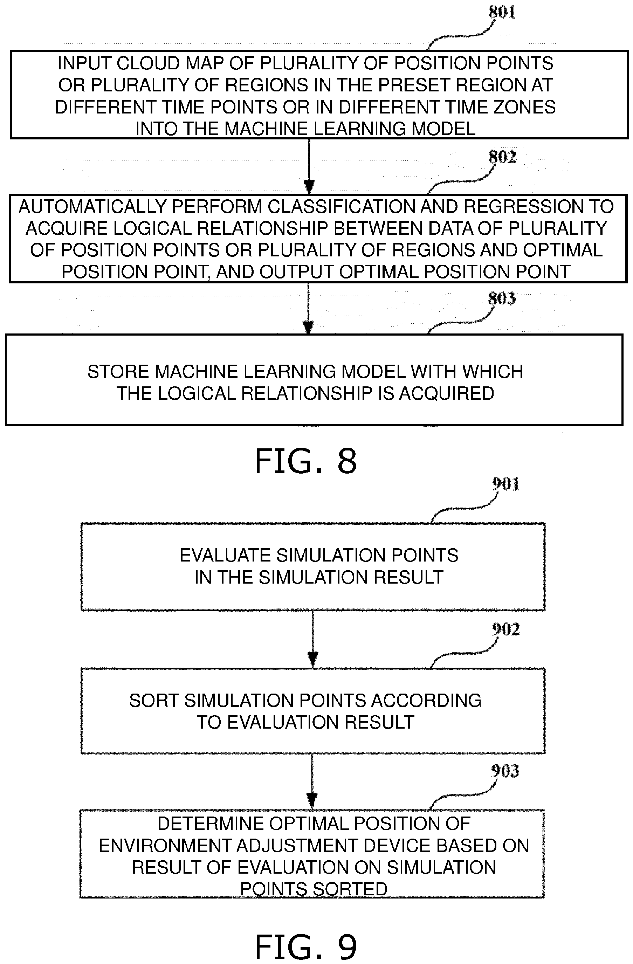

Fig. 8 is a flowchart of a method for training a machine learning model according to Example 1 of the present invention. As illustrated in Fig. 8, the method includes: step 801 of inputting a cloud map of a plurality of position points or a plurality of regions in the preset region at different time points or in different time zones into the machine learning model; step 802 of automatically performing classification and regression to acquire a logical relationship between data of the plurality of position points or the plurality of regions and an optimal position point, and outputting the optimal position point; and step 803 of storing the machine learning model with which the logical relationship is acquired.

For example, a result of simulation at 10 simulation points are input into an SVM model. Then, for example, a cloud map of a change in temperature at the 10 simulation points at different time points or a video segments of a cloud map of a change in temperature in different time zones are input into the machine learning model. The SVM model automatically performs logic training to obtain the logical relationship between the position data of the 10 points and the optimal position point. The logical relationship as a result of the training by the SVM may include a position point at which heat dissipation is fastest, or may be another dimension for determining the optimal position. For example, a position point achieving the target temperature most quickly, or a position point achieving highest energy saving, or a position point achieving the highest comfort is obtained.

In Example of the present invention, the optimal position may be calculated without using the machine learning model. For example, each simulation point may be evaluated, that is for example, ranked or scored. Then, the optimal position is determined according to the evaluation result.

Fig. 9 is a flowchart of another method for implementing step 102 according to Example 1 of the present invention. As illustrated in Fig. 9, the method includes: step 901 of evaluating simulation points in the simulation result; step 902 of sorting the simulation points according to a result of the evaluation; and step 903 of determining the optimal position of the environment adjustment device based on the evaluation result of the sorted simulation points.

In Example of the present invention, the evaluation standard may be set according to the purpose. For example, a specific evaluation standard may be set based on whether the optimal position is the position point achieving the fastest heat dissipation, the position point achieving the target temperature most quickly, the position point achieving the highest energy saving, or the position point achieving the highest comfort.

There may be a plurality of evaluation conditions for each of such evaluation standards. For example, for each simulation point, the number of evaluation conditions satisfied at the simulation point is determined. For example, if two evaluation conditions are satisfied, the rank of the simulation point is determined to be A, if one evaluation condition is satisfied, the rank of the simulation point is determined to be B, and if none of the evaluation conditions is satisfied, the rank of the simulation point is determined to be C. As a result, after the simulation points are sorted according to the evaluation result, the simulation point with the highest evaluation rank, i.e., the simulation point ranked A, can be determined to be the optimal position point.

In Example of the present invention, after the optimal position of the environment adjustment device is calculated, in step 103, the environment adjustment device is arranged in the preset region based on the optimal position of the environment adjustment device.

In step 103, a plurality of the environment adjustment devices may be laid out sequentially based on an interval matching the model number of the environment adjustment devices. Further, the number of the regions where the environment adjustment devices are arranged and the number of the environment adjustment devices in a unit area are calculated based on the ventilation influence of the environment adjustment devices.

For example, when outdoor units of an air conditioner are laid out sequentially using a method of calculating the optimal position point or optimal region, and then performing matching for a corresponding interval based on the model number of the outdoor units, and sequentially laying out the outdoor units, the layout accuracy of the outdoor units can be improved. Further, after the optimal point or region is calculated, the number of the regions where the outdoor units are arranged and the number of the outdoor units additionally provided at predetermined positions in a unit area are acquired by calculation based on the ventilation influence of the outdoor units (for example, the wind direction, the magnitude of the air volume, and the distance).

When other devices have been installed on the roof of the building in advance, the outdoor unit may be laid out through calculation of a position point and a region achieving the fastest heat dissipation, based on the forcibly selected installation region.

Hereinafter, some specific embodiments will be described by taking an outdoor unit or an indoor unit of an air conditioner as an example.

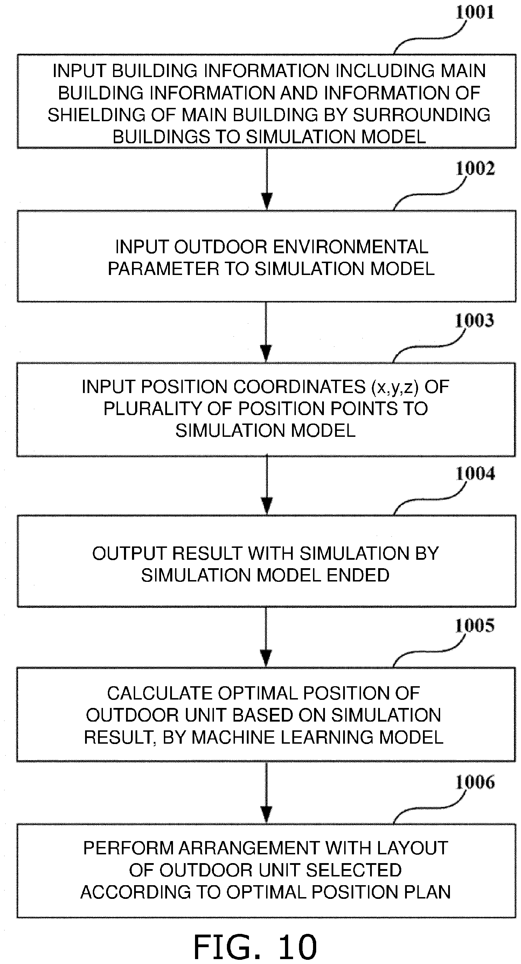

Fig. 10 is a flowchart of an arrangement method for an outdoor unit of an air conditioner according to Example 1 of the present invention. As illustrated in Fig. 10, the method includes: step 1001 of inputting building information including main building information and information of shielding of the main building by surrounding buildings to a simulation model; step 1002 of inputting an outdoor environmental parameter to the simulation model; step 1003 of inputting position coordinates (x,y,z) of a plurality of position points to the simulation model; step 1004 of outputting a result with simulation by the simulation model ended; step 1005 of calculating an optimal position of the outdoor unit based on the simulation result, by a machine learning model; and step 1006 of performing arrangement with a layout of the outdoor unit selected according to the optimal position plan.

In this way, the environment device optimal layout position of the outdoor unit is calculated based on the simulation result. The layout accuracy of the outdoor unit is further improved.

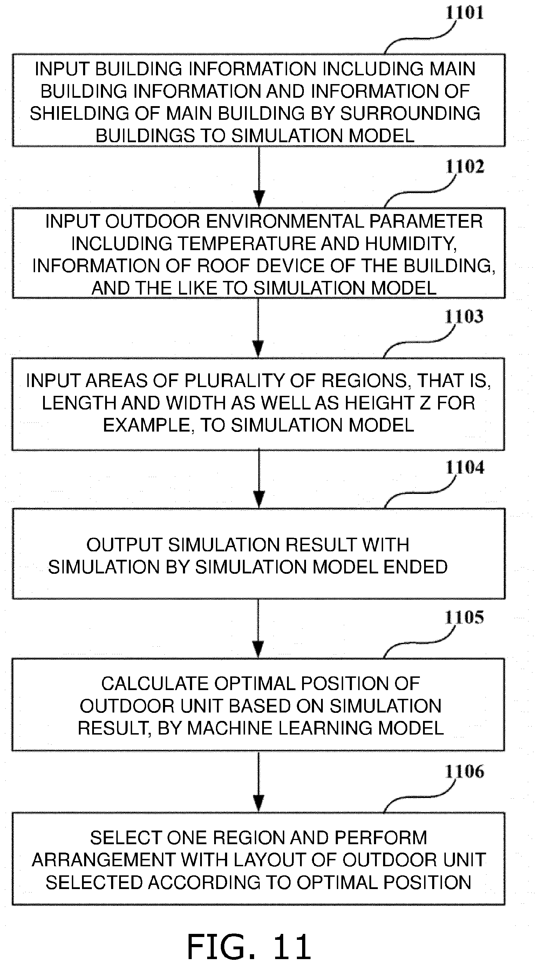

In Example of the present invention, furthermore, the simulation may be performed for each region, and thus the outdoor unit may be arranged when one region is selected. Fig. 11 is a flowchart of another arrangement method for an outdoor unit of an air conditioner according to Example 1 of the present invention. As illustrated in Fig. 11, the method includes: step 1101 of inputting building information including main building information and information of shielding of the main building by surrounding buildings to a simulation model; step 1102 of inputting an outdoor environmental parameter including temperature and humidity, information of a roof device of the building, and the like to the simulation model; step 1103 of inputting areas of a plurality of regions, that is, length and width as well as a height Z for example, to the simulation model; step 1104 of outputting a simulation result with the simulation by the simulation model ended; step 1105 of calculating an optimal position of the outdoor unit by the machine learning model based on the simulation result; and step 1106 of selecting one region and performing arrangement with a layout of the outdoor unit selected according to the optimal position.

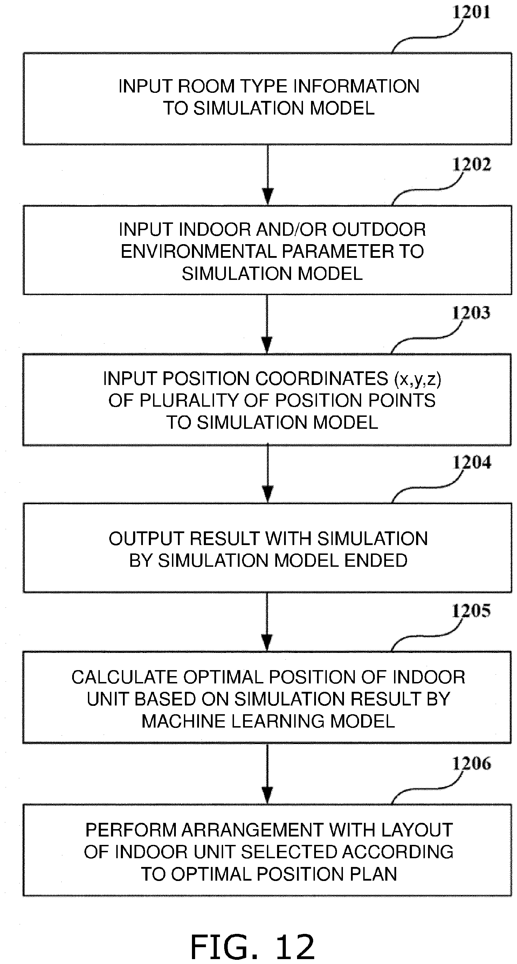

Fig. 12 is a flowchart of an arrangement method for an indoor unit of an air conditioner according to Example 1 of the present invention. As illustrated in Fig. 12, the method includes: step 1201 of inputting room type information to a simulation model; step 1202 of inputting an indoor and/or outdoor environmental parameter to the simulation model; step 1203 of inputting position coordinates (x,y,z) of a plurality of position points to the simulation model; step 1204 of outputting a simulation result of the simulation model with the simulation by the simulation model ended; step 1205 of calculating an optimal position of the indoor unit based on the simulation result by a machine learning model; and step 1206 of performing the arrangement with a layout of the indoor unit selected according to the optimal position plan.

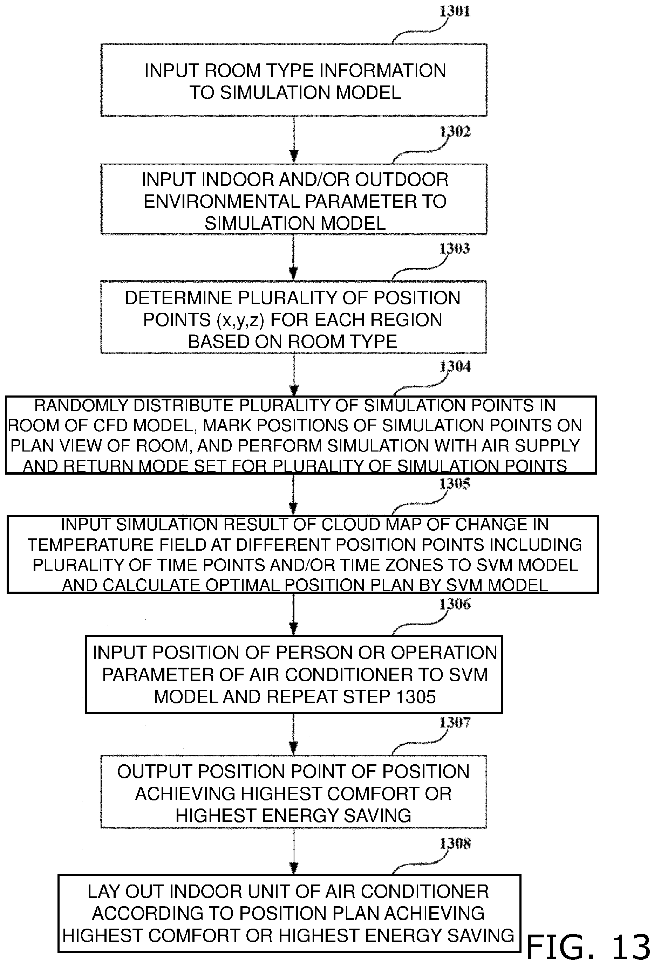

Fig. 13 is a flowchart of another arrangement method for an indoor unit of an air conditioner according to Example 1 of the present invention. As illustrated in Fig. 13, the method includes: step 1301 of inputting room type information to a simulation model; step 1302 of inputting an indoor and/or outdoor environmental parameter to the simulation model; step 1303 of determining a plurality of position points (x,y,z) for each region based on the room type; step 1304 of randomly distributing a plurality of simulation points in a room of a CFD model, marking positions of the simulation points on a plan view of the room, performing simulation with an air supply and return mode set for the plurality of simulation points, performing air flow and temperature simulation at each of the plurality of simulation points, and outputting the temperature and air flow results at the plurality of simulation points as a simulation result; step 1305 of inputting a simulation result of a cloud map of a change in a temperature field at different position points including a plurality of time points and/or time zones to an SVM model and calculating an optimal position plan by the SVM model; step 1306 of inputting a position of a person or an operation parameter of an air conditioner to the SVM model and repeating step 1305; step 1307 of outputting a position point of a position achieving the highest comfort or highest energy saving; and step 1308 of laying out the indoor unit of the air conditioner according to the position plan achieving the highest comfort or highest energy saving.

In Example of the present invention, the arrangement method for an environment adjustment device may be used in an actual scene, and automatic arrangement in a building information model (Building Information Modeling, BIM), i.e., a BIM model may be performed. Each of such cases will be described below in detail.

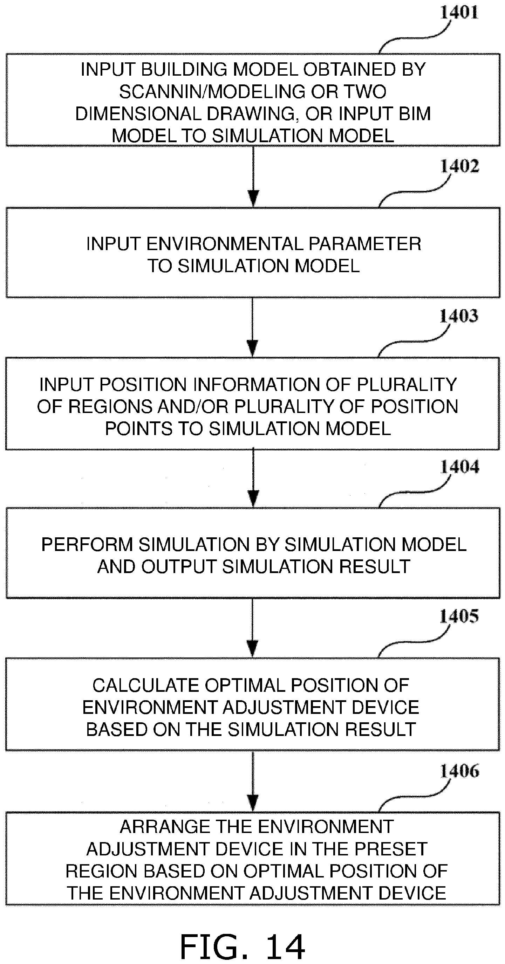

Fig. 14 is a flowchart of an arrangement method for an environment adjustment device in an actual scene according to Example 1 of the present invention. As illustrated in Fig. 14, the method includes: step 1401 of inputting a building model as a result of scanning/modeling or a two dimensional drawing or inputting a BIM model to a simulation model; step 1402 of inputting an environmental parameter to the simulation model; step 1403 of inputting position information of a plurality of regions and/or a plurality of position points to the simulation model; step 1404 of performing simulation by the simulation model and outputting the simulation result; step 1405 of calculating an optimal position of the environment adjustment device based on the simulation result; and step 1406 of arranging the environment adjustment device in the preset region based on the optimal position of the environment adjustment device.

In this manner the optimal position acquired better matches the actual situation of site, the environmental parameter closer to the data of the site is obtained, and the more accurate simulation result is obtained. At the same time, the wide applicability is achieved.

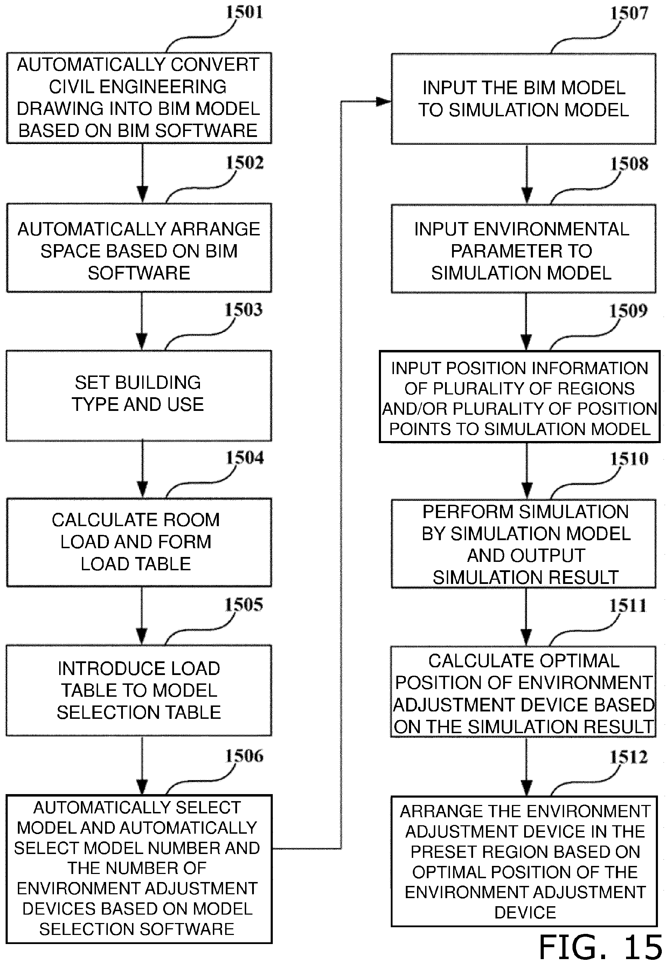

Fig. 15 is a flowchart of a method for arranging an environment adjustment device in a BIM model according to Example 1 of the present invention. As illustrated in Fig. 15, the method includes step 1501 of automatically converting a civil engineering drawing into a BIM model based on BIM software; step 1502 of automatically arranging a space based on the BIM software; step 1503 of setting building type and use; step 1504 of calculating a room load and forming a load table; step 1505 of introducing the load table to a model selection table; step 1506 of automatically selecting a model number and the number of environment adjustment devices based on model selection software; step 1507 of inputting the BIM model to a simulation model; step 1508 of inputting an environmental parameter to the simulation model; step 1509 of inputting position information of a plurality of regions and/or a plurality of position points to the simulation model; step 1510 of performing simulation by the simulation model and outputting the simulation result; step 1511 of calculating an optimal position of the environment adjustment device based on the simulation result; and step 1512 of arranging the environment adjustment device in the preset region based on the optimal position of the environment adjustment device.

In this manner, with the air conditioner taken as an example, the entire processes of air conditioner system designing is implemented through the digitization of information of the air conditioner system and each device, for example. In a distribution phase of the process, the generated distribution plan matches the actual construction plan. Thus, the design accuracy is further improved, and an error between the position of the indoor unit and the actual calculated or arranged position is reduced. Furthermore, the accuracy of the arrangement position of the air conditioner of the actual indoor unit is improved, and the deviation from the actual scene is reduced. After the corresponding selection and arrangement is finished, the corresponding pipe and wiring are changed to a correspondingly appropriate diameter. Instruction for on-site assembly is facilitated. Further, the phase leads to a building design phase. The information is shared on the cloud side, and is easily communicated among parties. The accuracy of material list is high. The information is comprehensive, shared among a plurality of parties, synchronized, and avoids errors due to subjective judgment.

In Example of the present invention, the BIM-based software may include at least one type of Revit, Industrial BIM Space, Industrial Load Calculation 8.0, MagiCAD and Navisworks software.

Corresponding to the above steps, the software includes modules including: a conversion module that converts a two dimensional drawing into a 3D (BIM) model; a first automatic arrangement module that automatically arranges a corresponding room name (number) for each region; a building load module that calculates a cooling load of a room; an automatic model selection module that introduces the cooling load into the model selection table and performs automatic model selection; a load test module that automatically calculates an adjusted room cooling load; a second automatic arrangement module that automatically arranges the corresponding air conditioner model; an automatic pipe connection module that automatically connects the air conditioner; an automatic diameter-changing module that performs automatic change to a corresponding pipe diameter in accordance with the model number of the air conditioner, and A material sharing module with which a material list of the air conditioner is output and shared on a cloud.

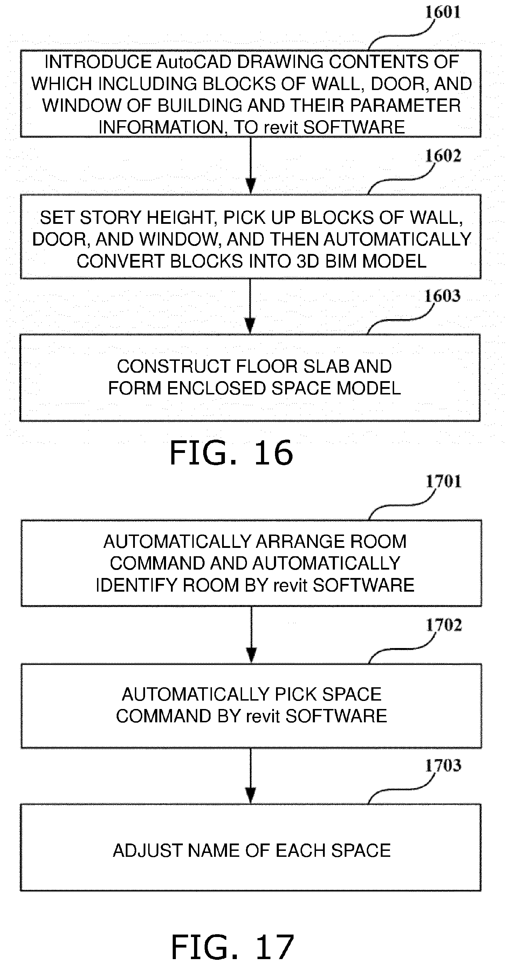

Fig. 16 is a flowchart of a method for implementing step 1501 according to Example 1 of the present invention. As illustrated in Fig. 16, the method includes: step 1601 of introducing an AutoCAD drawing the contents of which including blocks of a wall, a door, and a window of building and their parameter information to revit software; step 1602 of setting the story height, picking up the blocks of the wall, door, and window, and then automatically converting the blocks into a 3D BIM model; and step 1603 of constructing a floor slab and forming an enclosed space model.

In the mode of the present invention, a drawing derived from within AutoCAD is in a DWG format. Regarding drawing and constructing of the floor slab, the floor slab may be constructed automatically or manually. Since most of the floor slabs above the ground do not involve the condition of lowering the structural floor height, manual constructing of the floor slab is selected for a faster process. The function of automatically constructing the floor slab can be used for basements. In addition, if the CAD drawing is well completed, the manual construction needs not to be selected. Successful layout-model conversion directly leads to a complete BIM model, meaning that no floor slab needs to be constructed.

The 3D BIM model obtained through the layout-model conversion on a 2D drawing enable easy reference and acquisition of information later on.

Fig. 17 is a flowchart of a method for implementing step 1502 according to Example 1 of the present invention. As illustrated in Fig. 17, the method includes step 1701 of automatically arranging a room command and automatically identifying the room by the revit software; step 1702 of automatically picking a space command by the revit software; and step 1703 of adjusting the name of each space.

In this way, the arrangement is automatically performed to correspond to each room, the name of each room is manually adjusted, and a foundation for automatically model selection later on is provided, whereby the matching model can more easily and accurately conform to the room. Of course, the adjustment here still belongs to manual adjustment at present. Of course, batch editing is also possible.

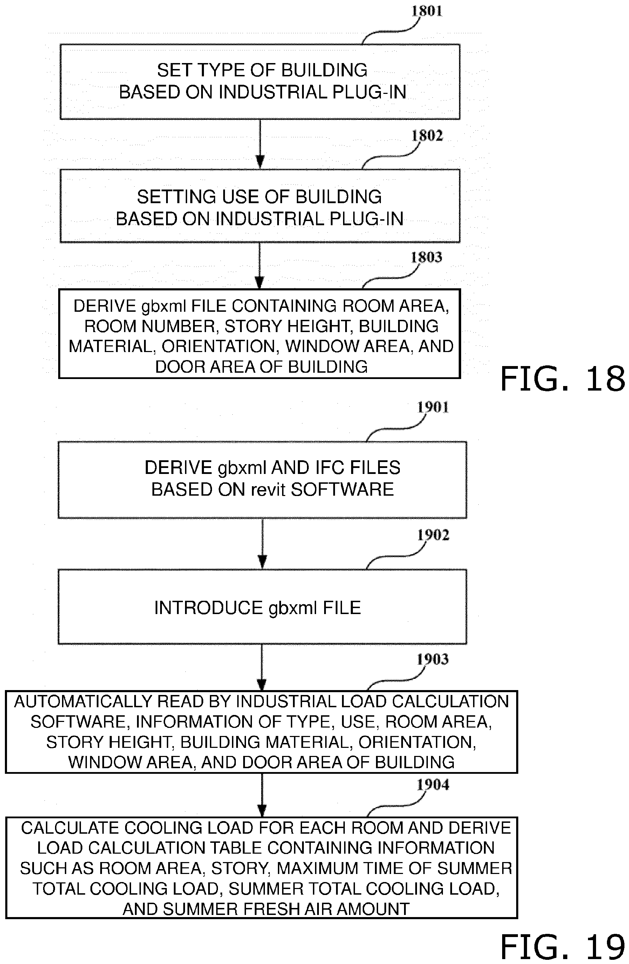

Fig. 18 is a flowchart of a method for implementing step 1503 according to Example 1 of the present invention. As illustrated in Fig. 18, the method includes: step 1801 of setting the type of a building based on an industrial plug-in; step 1802 of setting the use of the building based on the industrial plug-in; and step 1803 of deriving a gbxml file including room area, room number, story height, building material, orientation, window area, and door area of the building.

In this way, the type and application of the building used as the essential elements for automatic corresponding model selection as described above, the application range of the present invention is widened. The air conditioner is arranged at a later stage to avoid a situation where the layout of an air conditioner is re-corrected according to a type and an applied region, and to improve the accuracy of arrangement.

A single building of an example has the basement being a parking lot, the first and second floors being supermarkets, the third floor being a restaurant, and the fourth to top floors being offices or homes. Thus, the series of air conditioner required differ among floors. Of course, since there is influence of the season and the geographical location, before the model selection and distribution, the application and type of the building are determined, and the function guide of each floor is also specifically confirmed. The batch editing corresponding to each floor can be performed after the confirmation, whereby the speed of ensuring accuracy can be improved.

Fig. 19 is a flowchart of a method for implementing step 1504 according to Example 1 of the present invention. As illustrated in Fig. 19, the method includes: step 1901 of deriving gbxml and IFC files based on revit software; step 1902 of introducing the gbxml file; step 1903 of automatically reading by industrial load calculation software, information of type, use, room area, story height, building material, orientation, window area, and door area of a building; and step 1904 of calculating a cooling load for each room and deriving a load calculation table containing information such as room area, story, maximum time of summer total cooling load, summer total cooling load, and summer fresh air amount.

In this manner, the load calculation is performed on the BIM model based on the two types of formats of IFC and gbXML, information of building geometric space information, room functions, position weather information, room areas of the building, room number, story height, building material, orientation, window area, door area, and the like are converted, the cooling load is calculated for each room, and a load calculation table is derived, whereby a highly accurate foundation is further provided for model selection.

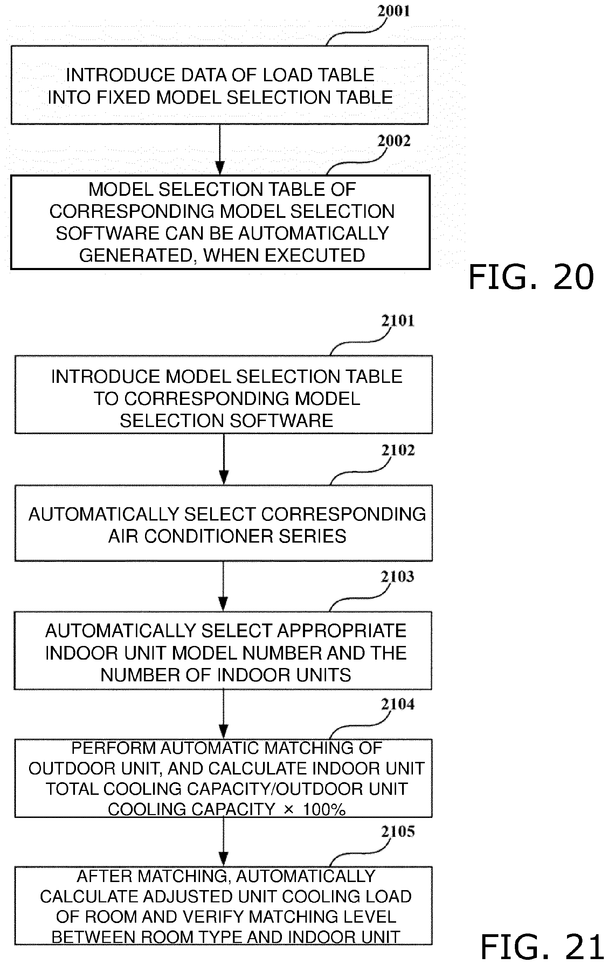

Fig. 20 is a flowchart of a method for implementing step 1505 according to Example 1 of the present invention. As illustrated in Fig. 20, the method includes step 2001 of introducing data of a load table into a fixed model selection table, and step 2002 of, when executed, enabling automatic generation of the model selection table of corresponding model selection software.

In Example of the present invention, the contents of the model selection table may include the story, the air conditioner number, the room type, the room name (room number), the cold indicator, the hot indicator, the indoor unit series, the indoor unit model number, and the number of indoor units. The information forms an comprehensive model selection list, which is convenient for automatic model search and selection by the system. The model selection based on manual associating as in conventional technique is avoided, that is, the system enables automatic corresponding model search and selection.

Fig. 21 is a flowchart of a method for implementing step 1506 according to Example 1 of the present invention. As illustrated in Fig. 21, the method includes: step 2101 of introducing a model selection table to corresponding model selection software; step 2102 of automatically selecting corresponding air conditioner series, for example, to use various series of air conditioners for a building; step 2103 of automatically and appropriately selecting an indoor unit model number and the number of indoor units; step 2104 of automatically performing matching for an outdoor unit to achieve 10 P, for example, in 600 square meters and calculating indoor unit total cooling capacity/outdoor unit cooling capacity × 100%; and step 2105 of, after the matching, automatically calculating the adjusted unit cooling load of the room and verifying the matching level between the room type and the indoor unit.

In this way, the selection of the air conditioner series is related to the application, and the matching of the air conditioner series can be performed based on energy saving. Here, not only the visualization of the design of the air conditioning system is performed but also, for example, for a commercial project generally using a medium-static pressure fan, corresponding adjustment for the needs of customers is performed for a specific situation. For a residential project generally using VRV residential N-series, corresponding adjustment for the needs of customers is performed for a specific situation. Based on the application and field as well as the functional guidance of the building, the corresponding air conditioner series is automatically determined, and the corresponding model and the corresponding number of air conditioners, that is, for example, how many indoor units of what model number with how much horse power, are automatically determined based on the load and the geographical location of each room.

In Example of the present invention, using a combination of the load table and the model selection table, the model selection can be completely automated, and the efficiency and accuracy of BIM HVAC design are improved accordingly. With the model selection method according to Example of the present invention, a model is automatically selected with higher accuracy, wide applicability is achieved, the model selection factors including the application specification and series of air conditioners under various influence factors are comprehensively taken into consideration instead of covering the applicability of the same type of air conditioners only, and the model selection is improved with the model selection accuracy guaranteed.

At the same time, the unit cooling load after the matching is further verified, and the accuracy of the matching between the model number of the air conditioner and the room is verified. The matching accuracy is further improved by mutual bidirectional verification.

For some rooms, an appropriate model number may not be selectable. Thus, the corresponding model number and the corresponding number of air conditioners may be manually adjusted to guaranteed accuracy.

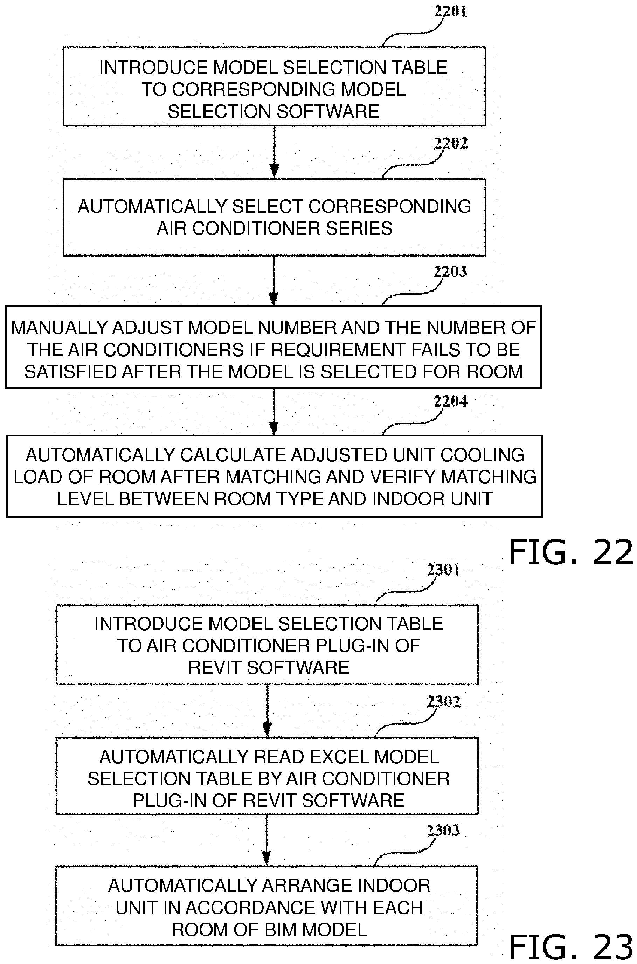

Fig. 22 is a flowchart of another method for implementing step 1506 according to Example 1 of the present invention. As illustrated in Fig. 22, the method includes: step 2201 of introducing a model selection table to corresponding model selection software; step 2202 of automatically selecting a corresponding air conditioner series, for example, to use various series of air conditioners for one building; step 2203 of manually adjusting the model number and the number of the air conditioners if a requirement fails to be satisfied after the model is selected for a room; and step 2204 of automatically calculating the adjusted unit cooling load of the room after matching and verifying the matching level between a room type and an indoor unit.

In this way, for a room with a small area, such as a room of a housekeeper, a laundry room, or a power distribution room, another matching is required, and bidirectional verification is performed to further ensure that all the rooms are matched with an appropriate series and model number, and ensure matching accuracy.

Fig. 23 is a flowchart of a method for implementing steps 1507 to 1512 according to Example 1 of the present invention. As illustrated in Fig. 23, the method includes: step 2301 of introducing a model selection table to an air conditioner plug-in of revit software; step 2302 of automatically reading an EXCEL model selection table by the air conditioner plug-in of the revit software; and step 2303 of automatically arranging the indoor units in accordance with each room of the BIM model.

In this way, with regard to how the air conditioner is arranged at the optimal position in the room, factors that are most likely to affect a change in BIM HVAC design in the future are taken into consideration. Thus, a comprehensive plan design is performed in terms of the accuracy of distribution. An owner and a developer of a real estate can each obtain the most satisfactory air conditioner arrangement plan. At the same time, the HVAC design takes into consideration more factors such as the construction time and the designer's design plan instead of merely providing as simple visualization, whereby the accuracy of the plan design can provide a guidance for the actual construction. Thus, no subjective judgment is required on site. At the same time, the plan design can provide a diagram showing the effect at the end of the construction, and the effectiveness of the guidance by the HVAC design of the BIM is maximized.

Specifically, the following steps take the interior style into consideration, and the position of the air conditioner changes later on depending on the inter style. Thus, a deviation from the automatic arrangement with the BIM is avoided, one step completion is enabled, and allows the use by the real estate developer and owner for selection. Furthermore, the optimal plan for the position point (coordinates) of the air conditioner is selected based on a scoring or ranking system. Marking and arrangement in the room of the BIM model is distributed based on the optimal plan for the position point. Of course, the height of the position point of the indoor unit may be taken into consideration, and the coordinates (X,Y,Z) of the optimal point of the plan may be output accordingly. The simulation system can specifically display a cross-sectional view of the height of an air supply port of the indoor unit and visualize the air blowing direction of the indoor unit at this height position. Of course, simulation can be performed with the shape and size of the indoor unit specified, or simulation can be performed for different seasons. The process of selecting a plurality of simulation points may include selecting simulation points at different heights and different positions.

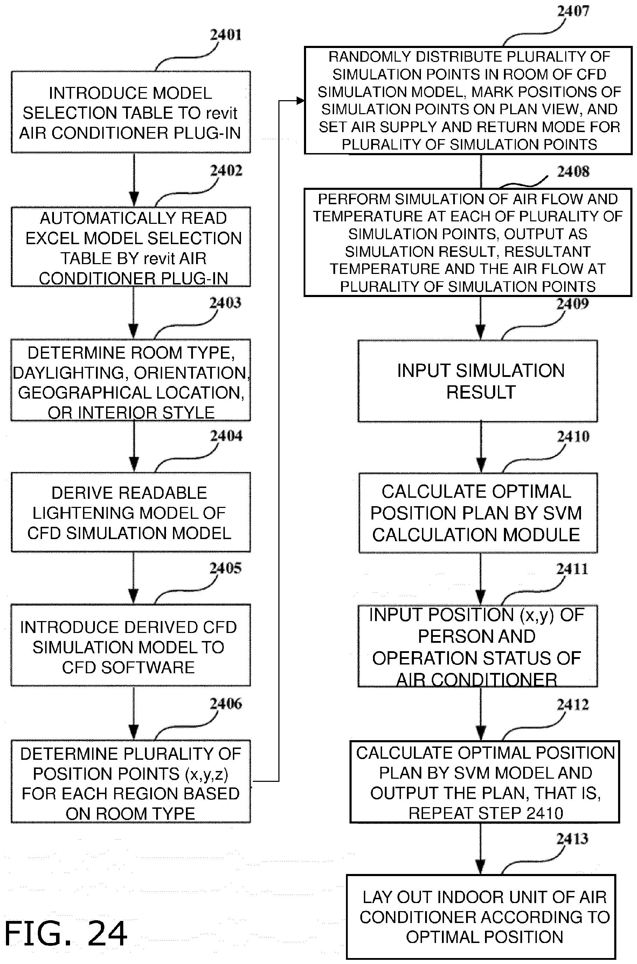

Fig. 24 is a flowchart of an embodiment of a method for implementing step 2303 according to Example 1 of the present invention. As illustrated in Fig. 24, the method includes: step 2401 of introducing a model selection table to a revit air conditioner plug-in; step 2402 of automatically reading an EXCEL model selection table by the revit air conditioner plug-in; and step 2403 of determining a room type, daylighting, orientation, geographical location, or an interior style; step 2404 of deriving a readable lightening model of a CFD simulation model; step 2405 of introducing the derived CFD simulation model to the CFD software; step 2406 of determining a plurality of position points (x,y,z) for each region based on the room type; step 2407 of randomly distributing a plurality of simulation points in a room of the CFD simulation model, marking the positions of the simulation points on a plan view, and setting an air supply and return mode at the plurality of simulation points; step 2408 of performing simulation of the air flow and the temperature at each of the plurality of simulation points, and outputting as the simulation result, the resultant temperature and air flow at the plurality of simulation points; step 2409 of inputting the simulation result such as a cloud map of a change in temperature field at different position points at a plurality of time points/time zones for example; step 2410 of calculating the optimal position plan by an SVM calculation module; step 2411 of inputting a position (x,y) of a person and an operation status of the air conditioner; step 2412 of calculating the optimal position plan by the SVM model and outputting the plan, that is, repeating step 2410; and step 2413 of laying out the indoor unit of the air conditioner according to the optimal position.

The foregoing method may adopt calculation of the optimal position by a machine learning module, and may adopt the determination of the optimal position based on a ranking system.

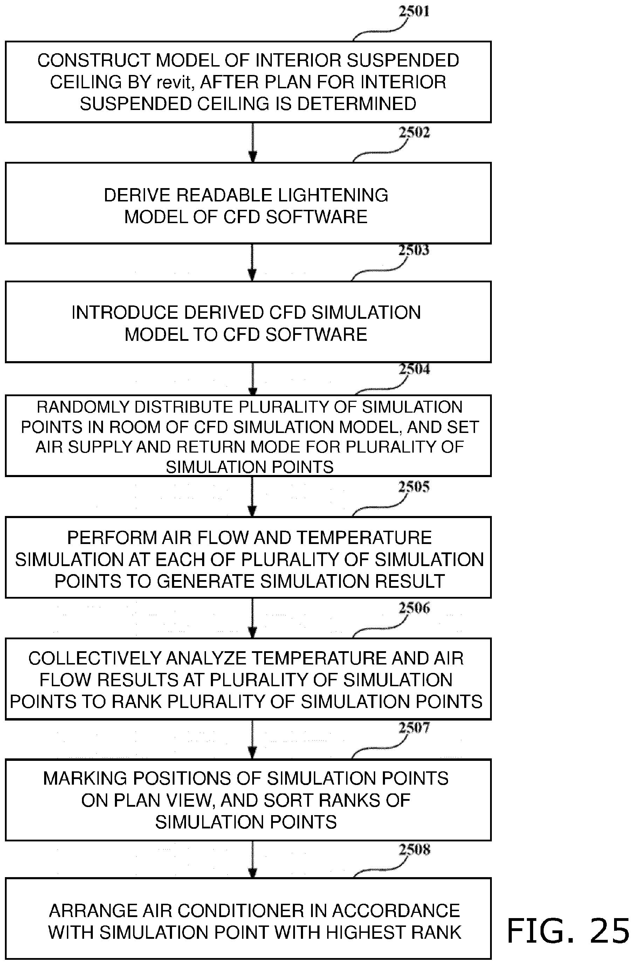

Fig. 25 is a flowchart of another embodiment of a method for implementing step 2303 according to Example 1 of the present invention. As illustrated in Fig. 25, the method includes the following steps.

Step 2501 of constructing a model of an interior suspended ceiling by revit, after a plan for the interior suspended ceiling is determined.

In Example of the present invention, the plan for the interior suspended ceiling is designed based on the room type, the orientation, the daylighting, and the door/window. The suspended ceiling model may be constructed, after the plan for the interior suspended ceiling is determined.

Step 2502 of deriving a readable lightening model of CFD software.
In Example of the present invention, the derived lightening model includes various parameters.

Step 2503 of introducing the derived CFD simulation model to the CFD software.

Specifically, the derived lightening model is introduced to the CFD simulation software. The specific simulation software may further include simulation software such as SimuWorks, VR-Platform, airpark, and Floven.

Step 2504 of randomly distributing a plurality of simulation points in a room of a CFD simulation model, and setting an air supply and return mode at the plurality of simulation points.

Step 2505 of performing air flow and temperature simulation at each of a plurality of simulation points to generate a simulation result.

Step 2506 of collectively analyzing the temperature and air flow results at the plurality of simulation points to rank the plurality of simulation points.

Step 2507 of marking the positions of the simulation points on a plan view, and sorting the ranks of the simulation points.

Step 2508 of arranging the air conditioner in accordance with the simulation point with the highest rank.

In Example of the present invention, further, it is taken into consideration as a reference that the ceiling machine is optimally placed in the middle, and the air-supply machine is optimally placed close to the edge of the wall. These are directly added within a position reference standard.

Steps 2506 to 2508 may specifically include the following.

Step 2506-1 of automatically performing determination and comparison regarding whether the temperature field simulated at the simulation point covers the entire indoor space.

For example, a simulation point closer to the edge of a room is more likely to be the optimal arrangement point in terms of decorativeness. The reference standard corresponds to installation of air conditioners of different series at different positions.

Step 2507-1 of outputting ranks or scores of the plurality of simulation points. If the above two evaluation standards are satisfied, evaluation of A is given, if one is satisfied, evaluation of B is given, and if none of them is satisfied, evaluation of C is given.

Step 2508-1 of determining a distribution plan achieving optimal decorativeness. The plan ranked A is output, introduced to the BIM model, and distribution is performed under the plan ranked A.

In this way, the optimal position point of the air conditioner is simulated in terms of decorativeness, and the accuracy is further improved. By changing the position of the indoor unit later on due to the interior style, a huge deviation from the actual scene is prevented. In Example of the present invention, an optimal position point is reserved in advance for simulation, and then an optimal air conditioner position arrangement plan for the corresponding interior style is obtained. Thus, the design accuracy of the air conditioner arrangement is further improved. Further simulation may be performed with different indoor unit sizes and shapes selected, to finally acquire the position of the air conditioner with the best match in terms of decorativeness.

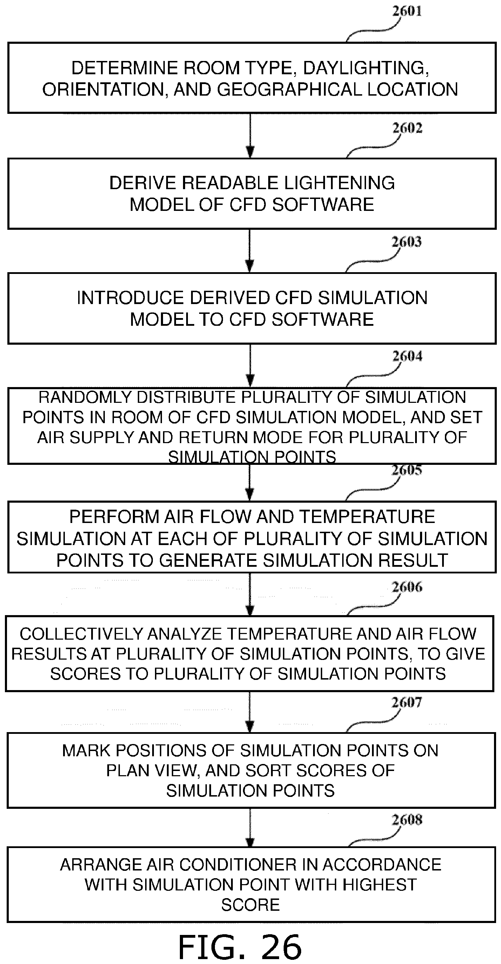

Fig. 26 is a flowchart of a further embodiment of a method for implementing step 2303 according to Example 1 of the present invention. As illustrated in Fig. 26, the method includes; step 2601 of determining the room type, daylighting, orientation, and geographical location; step 2602 of deriving a readable lightening model of CFD software; step 2603 of introducing the derived CFD simulation model to the CFD software; step 2604 of randomly distributing a plurality of simulation points in a room of a CFD simulation model, and setting an air supply and return mode at the plurality of simulation points; step 2605 of performing air flow and temperature simulation at each of the plurality of simulation points to generate a simulation result; step 2606 of collectively analyzing the temperature and air flow results at the plurality of simulation points, to give scores to the plurality of simulation points; step 2607 of marking the positions of the simulation points on a plan view, and sorting the scores of the simulation points; and step 2608 of arranging the air conditioner in accordance with the simulation point with the highest score.

In Example of the present invention, in addition to the evaluation standard for decorativeness, other evaluation standards can be further adopted. For example, for an evaluation standard for comfort, steps 2506 to 2508 may specifically include the following.

Step 2506-2 of performing simulation for the simulation point by the system.

For example, a state diagram of a temperature field is collected, and a ratio between red and green is lower than or equal to a predetermined ratio.

Step 2507-2 of outputting ranks or scores of the plurality of simulation points. For example, when the condition is satisfied, it is determined as A, and when the condition is not satisfied, it is determined as B.

Step 2508-2 of outputting the plan ranked A, and performing a distribution setting by the BIM model.

In this way, the position achieving the highest comfort is simulated according to the parameters of the room area, the room type, the orientation, the light irradiation, the season, the geographical location of the window, and the story height. When the shape differ among different air supply ports and air return ports, with the comfort evaluation standard of Example of the present invention, the installation position of the air conditioner achieving comfort is further determined instead of the subjective determination to perform arrangement at a position far from the position of a person, whereby optimal design accuracy is achieved.

For evaluating whether the location of the indoor simulation point is a position point achieving high comfort, steps 2506 to 2508 may specifically include the following.

Step 2506-3 of performing simulation at the simulation point by the system.

For example, photographing is performed in a predetermined time zone, and a time result with which the homogenization time of the temperature field is the shortest is determined.

Step 2507-3 of performing input, determination, analysis, and sorting of the simulation result, and performing sorting based on ranks ABC according to the time length.

Step 2508-3 of outputting a distribution plan ranked A corresponding to the most comfortable point, and performing distribution of simulation points corresponding to the BIM.

In this way, the position point achieving the highest comfort can be acquired, and an improvement in comfort accuracy and simulation time saving are achieved. Furthermore, by the sorting, the reason why the air conditioners cannot be arranged at other position points can be clearly understood.

For example, for an evaluation standard in terms of energy saving, steps 2506 to 2508 may specifically include: step 2506-4 of determining a temperature field, arranging ten points distributed in the room, obtaining the state with the highest or lowest temperature, setting the temperature, and outputting a simulation point achieving the set temperature most quickly as a simulation result; step 2507-4 of inputting the simulation result, and performing ranking and sorting based on ranks ABC; and step 2508-4 of outputting a distribution plan ranked A corresponding to the point achieving the highest energy saving and distributing the simulation points corresponding to the BIM.

In this way, the distribution point of the air conditioner achieving the optimal energy-saving can be selected most quickly, and the design efficiency is improved with the design accuracy guaranteed. In addition, based on the parameters of the room area, the room type, the orientation, the light irradiation, the season, the geographical location of the window, and the story height, the position achieving the highest energy-saving is simulated. This is not subjective determination for arrangement at a location far from the door and the window. Thus, with the evaluation standard in terms of energy saving of Example of the present invention, the installation position of the air conditioner achieving energy-saving is further determined, and the optimal design accuracy is achieved.

For example, for the evaluation standard in terms of energy saving, steps 2506 to 2508 may specifically include: step 2506-5 of determining a temperature field, arranging ten points distributed in a room, presetting a time zone, setting a temperature, and outputting an operation time of each air conditioner as a simulation result; step 2507-4 of inputting the simulation result, and performing ranking and sorting based on ranks ABC; and step 2508-4 of outputting a distribution plan ranked A corresponding to the point achieving the highest energy saving and distributing the simulation points corresponding to the BIM.

In this way, the standard for determining energy saving by using the operation time of the air conditioner as a dimension is considered more practically to perform the simulation, whereby higher energy saving effect is achieved.

In Example of the present invention, the above ranking based arrangement method can provide the customer with choices. After acquiring the design of the air conditioner, the customer can make free selection. For example, he or she can make selection for high decorativeness, or a decision for energy-saving or comfort. The corresponding BIM model provides a corresponding effect based on the selection. It should be noted that, to be more convincing, a selection notification may be issued to the user.

In Example of the present invention, the distribution position of the air conditioner may also be visualized only based on the room type. A method for such arrangement is as follows.

For example, regarding a rectangular room type rule, when the number of indoor units is 1 to 3, the indoor units are arranged in a line at the center; when the number of indoor units is 4 to 6, the indoor units are arranged in two lines at the center; and When the number of indoor units is 7 to 9, the indoor units are arranged in three lines at the center, and the cross sections of the air supply ports of these indoor units in each line are on the same horizontal plane.

For example, regarding the arrangement rule of the indoor units for a square room type, when the number of the indoor units is 1 to 3, the indoor units are arranged in a row in a straight line at the center, and When the number of the indoor units is 4 or 5, the indoor units are annularly arranged with the air supply ports of the indoor units in each row being on a horizontal plane.

For example, regarding the arrangement rule of the indoor units to be adopted for other room types, the indoor units are all arranged in a line, the air supply ports of the indoor units are on the same horizontal plane, and the indoor units are arranged without exceeding the range of the room in such a case.

The above is the optimal position that is not calculated by an AI model.

Specifically, there is included: uploading an indoor interior drawing; reversely correcting the position of the indoor unit; and correcting the position of the indoor unit; and adjusting the arrangement of the indoor units according to the floor plan design or calculation. The arrangement step in step 2303 may further include the reverse correction. Thus, the maintenance of the air conditioner later on can be facilitated. Specifically, external intervention includes uploading an external interior design drawing to the BIM model, and matching the distribution position of the air conditioner in the BIM with the position in the design drawing.

Accordingly, step 2302 specifically includes: reading data of the room number and the room name, as well and the model number and the number of devices in an Excel table; and automatically capturing a device family in a revit library in revit software, and performing arrangement based on the model number and the number devices in the table according to the room number created in the revit model.

In Example of the present invention, taking a multi-air conditioner as an example, steps after the indoor units are arranged may be further included that are: S81 of, after the arrangement of the indoor units, drawing main pipes of refrigerant pipes and condensate pipes, and selecting indoor units required to be connected to the same air conditioning system using box or by clicking; and S82 of manually arranging outdoor units; and S83 of manually connecting the outdoor units and the indoor units of the air conditioning system.

It should be noted that a refrigerant system does not meet standards for water and air systems at all.

Furthermore, S9 of automatically changing the diameter based on the revit air conditioner after step S83 may be included.

Step S9 includes: S91 of selecting, by clicking, a main pipe or a branch pipe of the multi-air conditioner, and automatically picking devices and pipes of the entire air conditioning system; S92 of automatically changing a diameter of a pipe based on a principle of the refrigerant pipe of the air conditioner; and S93 of automatically changing a diameter of a pipe based on a principle of the condensed water pipe and a pipe of the air conditioner.

Specifically, the principle of the refrigerant pipe of the air conditioner in step S92 is as illustrated in Table 1.

**[Table 1]**

| Model number of outdoor unit | Model number of first branch pipe | Capacity of indoor unit | Model number of non-first branch pipe | Size of gas pipe | Size of liquid pipe |
|---|---|---|---|---|---|
| | | X < 16.8KW | KHRP26NC22T | Φ15.9 | Φ9.5 |
| RUXYQ8∼10BA | KHRP26NC33T | 16.8KW ≤ X < 22.4KW | | Φ19.1 | |
| | | 22.4KW ≤ X < 33.0KW | KHRP26NC33T | Φ22.2 | |
| RUXYQ12∼22BA | KHRP26NC72T | 33.0KW ≤ X < 47.0KW | KHRP26NC72T | Φ28.6 | Φ12.7 |
| | | 47.0KW ≤ X < 71.0KW | | | Φ15.9 |
| RUXYQ24∼54BA | KHRP26NC73T+73P | 71.0KW ≤ X < 104.0KW | KHRP26NC72T+73P | Φ31.8 | Φ19.1 |
| | | 104.0KW ≤ X < 154.0KW | | Φ38.1 | |
| RUXYQ56∼66BA | KHRP26NC73T+73P | 154.0KW ≤ X | | Φ41.3 | |

In step S93, the specific principle of the water cooling and condensing pipe is as illustrated in Table 2.

**[Table 2]**

| PVC pipe | Inner diameter of (Standard value: mm) | Inner diameter of pipe (mm) | Allowable flow rate (liters/hour) | | Note |
|---|---|---|---|---|---|
| | | | Gradient 1:50 | Gradient 1:100 | |
| PVC25 | 19 | 20 | 39 | 27 | Cannot be used for merging pipe |
| PVC32 | 27 | 25 | 70 | 50 | |
| PVC40 | 34 | 31 | 125 | 88 | Can be used for merging pipe |
| PVC50 | 44 | 40 | 247 | 175 | |
| PVC63 | 56 | 51 | 473 | 334 | |

In Example of the present invention, furthermore, step S10 of plotting a drawing based on a material statistics of revit and a DWG format after step S9 may be included.

Step S10 specifically includes: S11 of deriving a material list based on the parameters of piping lengths, piping specifications, pipe specifications and piping materials in a revit electro-mechanical model; S12 of automatically adding a pipe mark and a device mark to a revit plan view and deriving a DWG diagram; and S13 of uploading the diagram to a cloud for sharing.

In this way, by deriving the list table, it is possible to provide a better guidance for the accuracy for the design later on and for the materials to be purchased in construction manufacturing. Thus, the design accuracy of the environment adjustment device is further improved.

In Example of the present invention, the indoor unit and the outdoor unit of the air conditioner may be disposed at the same time. The arrangement accuracy is further improved, the operation efficiency of the air conditioner is improved, and the service life is extended.

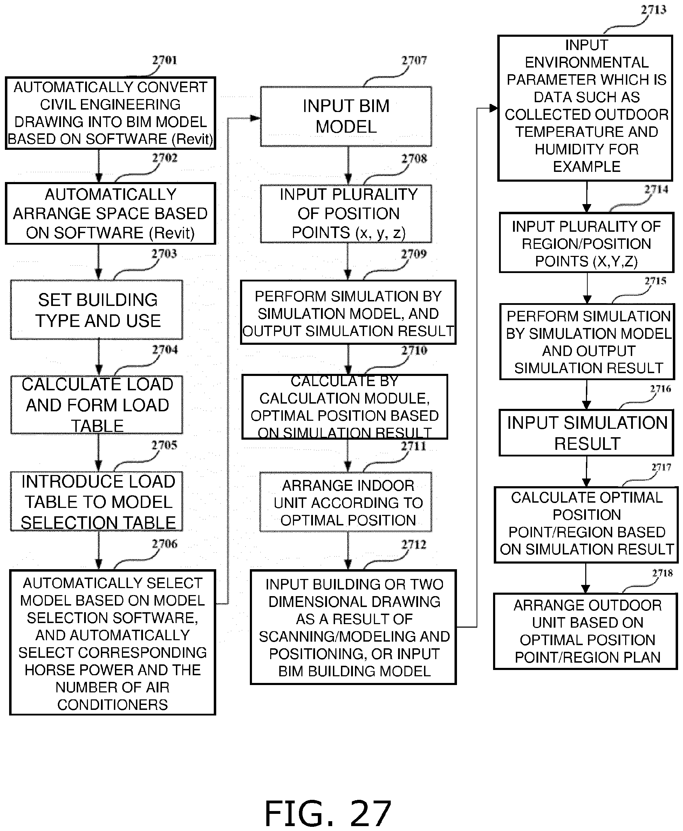

Fig. 27 is a flowchart of a method for simultaneously arranging an indoor unit and an outdoor unit of an air conditioner according to Example 1 of the present invention. As illustrated in Fig. 27, the method includes step 2701 of automatically converting a civil engineering drawing to a BIM model based on software (Revit); step 2702 of automatically arranging a space based on the software (Revit); step 2703 of setting building type and use; step 2704 of calculating a load and forming a load table; step 2705 of introducing the load table to a model selection table including a model number corresponding to a living room, kitchen, and bathroom for example; step 2706 of automatically selecting a model based on model selection software, and automatically selecting the corresponding horse power and the corresponding number of air conditioners; step 2707 of inputting the BIM model; step 2708 of inputting a plurality of position points (x,y,z); step 2709 of performing simulation by the simulation model, and outputting the simulation result; step 2710 of calculating by a calculation module, the optimal position based on the simulation result; step 2711 of arranging the indoor unit according to the optimal position; step 2712 of inputting a building as a result of scanning/modeling and positioning or two dimensional drawing, inputting a BIM building model, or inputting a model of another fresh air device, machine chamber, water tower, or the like; step 2713 of inputting an environmental parameter which is data such as collected outdoor temperature/humidity for example; step 2714 of inputting a plurality of region/position points (X,Y,Z); step 2715 of performing simulation by the simulation model and outputting the simulation result; step 2716 of inputting the simulation result; step 2717 of calculating the optimal position point/region based on the simulation result; and step 2718 of arranging the outdoor unit based on the optimal position point/region plan.

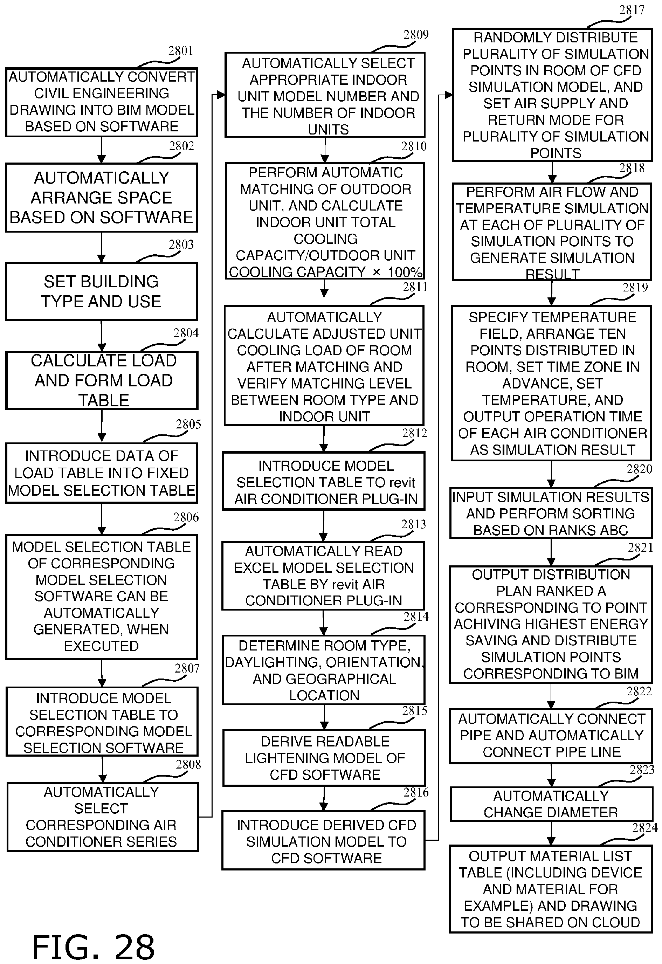

Fig. 28 is a flowchart of an arrangement method for an air conditioner with excellent energy-saving performance according to Example 1 of the present invention. As illustrated in Fig. 28, the method includes: step 2801 of automatically converting a civil engineering drawing to a BIM model based on software; step 2802 of automatically arranging a space based on the software; step 2803 of setting building type and use; step 2804 of calculating a load and forming a load table; step 2805 of introducing data of the load table into a fixed model selection table; step 2806 of, when executed, enabling automatic generation of the model selection table of the corresponding model selection software; step 2807 of introducing the model selection table to the corresponding model selection software; step 2808 of automatically selecting a corresponding series of air conditioners, for example, so that various series of air conditioners can be used for one building; step 2809 of automatically and appropriately selecting an indoor unit model number and the number of indoor units; step 2810 of automatically performing matching for an outdoor unit to achieve 10 P, for example, in 600 square meters and calculating indoor unit total cooling capacity/outdoor unit cooling capacity × 100%; and step 2811 of automatically calculating the adjusted unit cooling load of the room after the matching and verifying the matching level between a room type and the indoor unit; step 2812 of introducing a model selection table to a revit air conditioner plug-in; step 2813 of automatically reading an EXCEL model selection table by the revit air conditioner plug-in; step 2814 of determining a room type, daylighting, orientation, or geographical location; step 2815 of deriving a readable lightening model of CFD software; step 2816 of introducing the derived CFD simulation model to the CFD software; step 2817 of randomly distributing a plurality of simulation points in a room of a CFD simulation model, and setting an air supply and return mode at the plurality of simulation points; step 2818 of performing air flow and temperature simulation at each of the plurality of simulation points to generate a simulation result; step 2819 of specifying a temperature field, arranging ten points distributed in a room, presetting a time zone, setting a temperature, and outputting an operation time of each air conditioner as a simulation result; step 2820 of inputting the simulation result, and performing sorting based on ranks ABC; step 2821 of outputting a distribution plan ranked A corresponding to the point achieving the highest energy saving and distributing the simulation points corresponding to the BIM; and step 2822 of automatically connecting a pipe, that is, automatically connecting a pipe line; step 2823 of automatically changing a diameter to a diameter of a corresponding pipe based on the model number, such that, for example, some horse powers correspond to some pipe diameters; and step 2824 of outputting a material list table (including device and material for example) and a drawing to be shared on the cloud.

The above is an example for energy saving. The air conditioner may be arranged by combining the interior style with the energy saving property or the decorative property. Specific method therefor is similar, and will not be elaborated herein.

As can be understood from Example described above, the optimal position of the environment adjustment device is calculated based on the simulation result of the target parameter in the preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

### (EXAMPLE 2)

Example 2 of the present invention provides an arrangement apparatus for an environment adjustment device, corresponding to the arrangement method for an environment adjustment device as described in Example 1, and the implementation of the method as described in Example 1 may be referred to the implementation of the apparatus, with identical contents or related contents not being described herein any further.

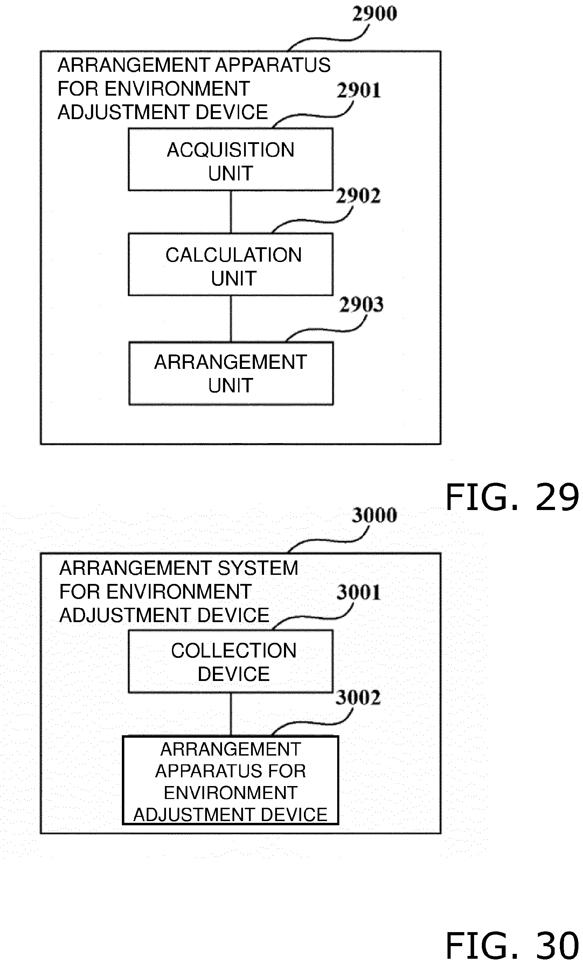

Fig. 29 is a schematic view of the arrangement apparatus for an environment adjustment device according to Example 2 of the present invention. As illustrated in Fig. 29, an arrangement apparatus 2900 for an environment adjustment device includes: an acquisition unit 2901 that acquires a simulation result of a target parameter in a preset region; a calculation unit 2902 that calculates an optimal position of an environment adjustment device based on the simulation result; and an arrangement unit 2903 that arranges the environment adjustment device in the preset region based on the optimal position of the environment adjustment device.

In Example of the present invention, reference may be made to related steps in Example 1 for implementation of functions of the units, and thus the implementation shall not be described herein any further.

As can be understood from Example described above, the optimal position of the environment adjustment device is calculated based on the simulation result of the target parameter in the preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

### (EXAMPLE 3)

Example 3 of the present invention provides an arrangement system for an environment adjustment device, including the arrangement apparatus for an environment adjustment device as described in Example 2, and the implementation of the apparatus as described in Example 2 and the implementation of the method as described in Example 1 may be referred to the implementation thereof, with identical contents or related contents not being repeatedly described.

Fig. 30 is a structural diagram of the arrangement system for an environment adjustment device according to Example 3 of the present invention. As illustrated in Fig. 30, an arrangement system 3000 for an environment adjustment device includes a collection device 3001 that collects an environmental parameter and an arrangement apparatus 3002 for an environment adjustment device.

In Example of the present invention, the environment adjustment device may be various types of environment adjustment devices. For example, the environment adjustment device is at least one of an air conditioning device, an air purifier, a fresh air device, a humidifier, a disinfection device, a lighting device, and a sound device.

In Example of the present invention, the arrangement system 3000 for an environment adjustment device may be used for household, business, or public use.

For example, the arrangement system 3000 for an environment adjustment device may be used in a home environment, a commercial environment such as an office, an office building, or a department store, or a public environment such as a school.

In Example of the present invention, the collection device 3001 may include various sensors for collecting the environmental parameters, and may further include a server for acquiring and storing the environmental parameters and the like.

In Example of the present invention, the apparatus described in Example 2 and the method described in Example 1 may be referred to the specific structure and function of the arrangement apparatus 3002 for an environment adjustment device and thus, the structure and function shall not be repeatedly described herein.

As can be understood from Example described above, the optimal position of the environment adjustment device is calculated based on the simulation result of the target parameter in the preset region, and the environment adjustment device is arranged based on the optimal position. Thus, in an actual operation, the layout can be performed with the optimal position of the environment adjustment device quickly and accurately determined. Furthermore, a completely automated arrangement flow of the environment adjustment device can be achieved. At the same time, the design accuracy of the environment adjustment device is closer to the situation at the time of actual installation. Still furthermore, the present invention is not only applied to automatic arrangement in software, but also applied to the situation where the environment adjustment device is actually installed without design layout by software, meaning that the application range is wide.

The above apparatus and method according to the Examples of the present invention may be implemented by hardware, or may be implemented by hardware in combination with software. The present Invention also relates to such a computer-readable program, which, when executed by a logic component, can cause the logic component to implement the above apparatus or component, or cause the logic component to implement the above various methods or steps.

Examples of the present invention further relate to a storage medium for storing the above program, such as a hard disk, a magnetic disk, an optical disc, a DVD, a flash memory, and the like for example.

It should be noted that the limitation of each step according to the present solution does not limit the order of the steps on the premise that it does not affect the implementation of the specific solution, and step written earlier may be executed earlier, later, or may be executed simultaneously with a later step, and all of these should regarding as belonging to the protection scope of the present application as long as the present solution can be implemented.

Although the present invention has been described with reference to specific embodiments, it should be understood by those skilled in the art that these descriptions are only exemplary and are not intended to limit the protection scope of the present invention. A person skilled in the art can make various modifications and corrections to the present invention based on the spirit and principle of the present invention, and these modifications and corrections also fall within the scope of the present invention.

### Citation List

### Patent Literature

PTL 1: Chinese Patent Application Publication No. 110489875

## Claims

1. An arrangement method for an environment adjustment device, the method comprising:
acquiring a simulation result of a target parameter in a preset region;
calculating an optimal position of an environment adjustment device based on the simulation result; and
arranging the environment adjustment device in the preset region based on the optimal position of the environment adjustment device.

2. The arrangement method for an environment adjustment device according to claim 1, wherein the acquiring the simulation result of the target parameter in the preset region includes:
acquiring an environmental parameter and position information of a plurality of regions and/or a plurality of position points in the preset region; and
inputting the environmental parameter and the position information to a simulation model to acquire the simulation result of the target parameter in the preset region.

3. The arrangement method for an environment adjustment device according to claim 2, wherein the environmental parameter includes at least one of indoor and/or outdoor temperature, humidity, wind direction, air volume, sound volume, sound frequency, brightness, color temperature, air quality, a height of a building where the environment adjustment device is located, geographical location of the building, climate information, a room orientation, information of shading by surrounding buildings, room type information of a room where the environment adjustment device is located, and information of another device in the preset region.

4. The arrangement method for an environment adjustment device according to claim 3, wherein the information of the other device includes an area and/or a position of at least one of a water tower on a roof of the building, an outdoor and/or indoor fresh air device, an exhauster, and a machine chamber.

5. The arrangement method for an environment adjustment device according to claim 3, wherein the room type information includes at least one of a building information model (BIM), a building model as a result of scanning/modeling, home layout information, a home two dimensional drawing, and interior information.

6. The arrangement method for an environment adjustment device according to claim 2, wherein the position information further includes areas of the plurality of regions

7. The arrangement method for an environment adjustment device according to claim 1, wherein the simulation result of the target parameter in the preset region includes a cloud map of a change in temperature at a plurality of simulation points in the preset region at a plurality of time points or in a plurality of time zones, and/or a cloud map of a change in a heat dissipation amount at the plurality of simulation points in the preset region at a plurality of time points or in a plurality of time zones.

8. The arrangement method for an environment adjustment device according to claim 7, wherein the acquiring the simulation result of the target parameter in the preset region includes:
randomly distributing a plurality of simulation points within a preset region of a roof of a building of a simulation model;
marking positions of the plurality of simulation points on a plan view of the roof of the building, and performing simulation with heat dissipation at the plurality of simulation points set; and
performing simulation for a heat dissipation amount at each of the plurality of simulation points at a plurality of time points or in a plurality of time zones at a preset temperature or for a preset time, and obtaining as the simulation result, a result of the simulation for the heat dissipation amount at the plurality of simulation points.

9. The arrangement method for an environment adjustment device according to claim 7, wherein the acquiring the simulation result of the target parameter in the preset region includes:
randomly distributing a plurality of simulation points within a preset region in a room of a simulation model;
marking positions of the plurality of simulation points on a plan view of the room and performing simulation with an air supply and return mode at the plurality of simulation points set; and
performing simulation for air flow and/or temperature at each of the plurality of simulation points, and obtaining, as the simulation result, a result of the simulation for the temperature and/or air flow at the plurality of simulation points.

10. The arrangement method for an environment adjustment device according to claim 1, wherein the optimal position of the environment adjustment device includes at least one of a position achieving good heat dissipation performance, a position achieving the target temperature most quickly, a position achieving good energy saving performance, a position achieving good comfort, and a position achieving good decorativeness.

11. The arrangement method for an environment adjustment device according to claim 1, wherein the calculating the optimal position of the environment adjustment device based on the simulation result includes
inputting the simulation result to a machine learning model and outputting the optimal position of the environment adjustment device.

12. The arrangement method for an environment adjustment device according to claim 11, wherein the calculating the optimal position of the environment adjustment device based on the simulation result further includes
cutting out a part corresponding to a preset height from the simulation result, to obtain the simulation result input to the machine learning model.

13. The arrangement method for an environment adjustment device according to claim 12, wherein the preset height is an installation height of the environment adjustment device or an average height of a user.

14. The arrangement method for an environment adjustment device according to claim 11, wherein the machine learning model is a support vector machine model or a convolutional neural network model.

15. The arrangement method for an environment adjustment device according to claim 11, wherein the inputting the simulation result to the machine learning model and outputting the optimal position of the environment adjustment device includes:
inputting the simulation result to the machine learning model and outputting a first optimal position of the environment adjustment device; and
inputting the simulation result and user information to the machine learning model and outputting a second optimal position of the environment adjustment device, and/or inputting the simulation result and an operation parameter of the environment adjustment device to the machine learning model and outputting a third optimal position of the environment adjustment device.

16. The arrangement method for an environment adjustment device according to claim 15, wherein the user information includes at least one of a position, an action trajectory, and wearing of a user.

17. The arrangement method for an environment adjustment device according to claim 1, wherein the calculating the optimal position of the environment adjustment device based on the simulation result further includes
evaluating simulation points in the simulation result;
sorting the simulation points according to a result of the evaluation; and
determining the optimal position of the environment adjustment device based on the result of the evaluation on the simulation points sorted.

18. The arrangement method for an environment adjustment device according to claim 1, wherein the arranging the environment adjustment device in the preset region based on the optimal position of the environment adjustment device includes
sequentially laying out a plurality of the environment adjustment devices based on an interval matching a model number of the environment adjustment devices.

19. The arrangement method for an environment adjustment device according to claim 1, wherein the arranging the environment adjustment device in the preset region based on the optimal position of the environment adjustment device further includes
calculating number of regions in which the environment adjustment device is arranged and number of the environment adjustment devices in a unit area, based on influence of ventilation of the environment adjustment devices.

20. The arrangement method for an environment adjustment device according to any one of claims 1 to 19, wherein the environment adjustment device is at least one of an air conditioning device, an air purifier, a fresh air device, a humidifier, a disinfection device, a lighting device, and a sound device.

21. The arrangement method for an environment adjustment device according to claim 20, wherein the air conditioning device includes an indoor unit of an air conditioner and/or an outdoor unit of the air conditioner

22. The arrangement method for an environment adjustment device according to claim 1 specifically comprising:
inputting a building model as a result of scanning/modeling or a two dimensional drawing or inputting a BIM model to a simulation model;
inputting an environmental parameter to the simulation model;
inputting position information of a plurality of regions and/or a plurality of position points to the simulation model;
performing simulation by the simulation model and outputting a simulation result;
calculating the optimal position of the environment adjustment device based on the simulation result; and
arranging the environment adjustment device in the preset region based on the optimal position of the environment adjustment device.

23. The arrangement method for an environment adjustment device according to claim 1 specifically comprising:
automatically converting a drawing of civil engineering work into a BIM model based on software;
automatically arranging a space based on the software;
setting type and use of a building;
calculating a load of a room and forming a load table;
introducing the load table to a model selection table;
automatically selecting a model based on model selection software, and automatically selecting a model number and number of the environment adjustment devices;
inputting the BIM model to a simulation model;
inputting an environmental parameter to the simulation model;
inputting position information of a plurality of regions and/or a plurality of position points to the simulation model;
performing simulation by the simulation model and outputting a simulation result;
calculating the optimal position of the environment adjustment device based on the simulation result; and
arranging the environment adjustment device in the preset region based on the optimal position of the environment adjustment device.

24. An arrangement apparatus for an environment adjustment device, the apparatus comprising:
an acquisition unit configured to acquire a simulation result of a target parameter in a preset region;
a calculation unit configured to calculate an optimal position of the environment adjustment device based on the simulation result; and
an arrangement unit configured to arrange the environment adjustment device in the preset region based on the optimal position of the environment adjustment device.

25. An arrangement system for an environment adjustment device, the system comprising:
a collection device configured to collect an environmental parameter; and
the arrangement apparatus for an environment adjustment device according to claim 24.
